(19) Europäisches Patentamt / European Patent Office / Office européen des brevets

(11) **EP 3 639 319 B1**

(12) **EUROPEAN PATENT SPECIFICATION**

(45) Date of publication and mention of the grant of the patent:
**09.08.2023 Bulletin 2023/32**

(21) Application number: **18818264.6**

(22) Date of filing: **11.06.2018**

(51) International Patent Classification (IPC):
*H01G 11/02* (2013.01)    *H01G 11/36* (2013.01)
*H01G 11/46* (2013.01)    *H01G 11/62* (2013.01)
*H01G 11/70* (2013.01)    *H01G 11/86* (2013.01)
*H01M 10/36* (2010.01)    *H01M 10/39* (2006.01)
*H01M 4/38* (2006.01)    *H01M 4/52* (2010.01)
*H01G 11/06* (2013.01)

(52) Cooperative Patent Classification (CPC):
**H01G 11/36; H01G 11/02; H01G 11/46;
H01G 11/62; H01G 11/70; H01G 11/86;
H01M 10/36;** H01G 11/06; Y02E 60/13; Y02E 60/50

(86) International application number:
**PCT/US2018/036846**

(87) International publication number:
**WO 2018/231684 (20.12.2018 Gazette 2018/51)**

(54) **ELECTRODES AND ELECTROLYTES FOR AQUEOUS ELECTROCHEMICAL ENERGY STORAGE SYSTEMS**

ELEKTRODEN UND ELEKTROLYTEN FÜR WÄSSRIGE ELEKTROCHEMISCHE ENERGIESPEICHERSYSTEME

ÉLECTRODES ET ÉLECTROLYTES DE SYSTÈMES AQUEUX D'ACCUMULATION D'ÉNERGIE ÉLECTROCHIMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.06.2017 US 201762519225 P**

(43) Date of publication of application:
**22.04.2020 Bulletin 2020/17**

(73) Proprietors:
• **The Regents of the University of California**
  **Oakland, CA 94607 (US)**
• **Nanotech Energy, Inc.**
  **Los Angeles, California 90025 (US)**

(72) Inventors:
• **HWANG, Jee, Youn**
  **Los Angeles, California 90025 (US)**
• **EL-KADY, Maher, F.**
  **Los Angeles, California 90024 (US)**
• **KANER, Richard, B.**
  **Pacific Palisades, California 90272 (US)**
• **KAVANAUGH, Jack**
  **Los Angeles, California 90049 (US)**

(74) Representative: **Murgitroyd & Company**
  **Murgitroyd House**
  **165-169 Scotland Street**
  **Glasgow G5 8PL (GB)**

(56) References cited:
  **WO-A2-2013/162649    WO-A2-2016/133571**
  **WO-A2-2016/133571    US-A- 3 223 639**
  **US-A1- 2011 242 730    US-A1- 2011 242 730**
  **US-A1- 2013 230 747    US-A1- 2014 050 947**
  **US-A1- 2014 134 503    US-A1- 2016 148 759**
  **US-A1- 2016 148 759**

• **VERONICA STRONG ET AL: "Patterning and Electronic Tuning of Laser Scribed Graphene for Flexible All-Carbon Devices", ACS NANO, vol. 6, no. 2, 28 February 2012 (2012-02-28), pages 1395-1403, XP055197734, ISSN: 1936-0851, DOI: 10.1021/nn204200w**

EP 3 639 319 B1

- **GROSU et al.: "Natural Magnetite for thermal energy storage: Excellent thermophysical properties, reversible latent heat transition and controlled thermal conductivity", Solar Energy Materials & Solar Cells, vol. 161, March 2017 (2017-03), pages 170-176, XP029880896,**
- **KARAMI et al.: "Sodium Sulfate Effects on the Electrochemical Behaviors of Nanostructured Lead Dioxide and Commercial Positive Plates of Lead-Acid Batteries", International Journal of Electrochemical Science, vol. 5, 15 July 2010 (2010-07-15), pages 1046-1059, XP055573382,**
- **"Ferromagnetism", Wikipedia, the free encyclopedia, 13 February 2017 (2017-02-13), XP055573388, Retrieved from the Internet: URL:https://en.wikipedia.org/w/index.php?title=Ferromagnetism&oldid=765289868 [retrieved on 2018-08-07]**

**Description**

**BACKGROUND**

There is a need for energy storage devices with the capability for storing and discharging energy very quickly and effectively. Some energy storage devices such as supercapacitors feature activated carbon electrodes impregnated with a non-aqueous electrolyte (typically acetonitrile) that operate at voltages between 2.2 V and 2.7 V. Unfortunately, activated carbons may have low specific capacitance in organic electrolytes, which severely limits the energy density of energy storage devices. In addition, organic solvents are often flammable, leading to safety and environmental concerns. Aqueous electrolytes, on the other hand, are safer and cheaper and have higher ionic conductivity, promising higher capacitance electrodes. There is a need for high-performance aqueous energy storage devices, such as batteries, supercapacitors, and micro-supercapacitors.

WO2016/133571 discloses a method of producing a graphene hybrid material by exposing a graphene precursor material to a laser source to form a laser-induced graphene, where the laser-induced graphene is derived from the graphene precursor material. The methods include a step of associating a pseudocapacitive material with the laser-induced graphene to form the graphene hybrid material. The formed graphene hybrid material can become embedded with or separated from the graphene precursor material.

US2016/0148759 discloses a porous interconnected corrugated carbon-based network (ICCN) composite made up of a plurality of carbon layers that are interconnected and expanded apart from one another to form a plurality of pores. Metallic nanoparticles are disposed within the plurality of pores. A capacitor has a first electrode and a second electrode separated from the first electrode by a dielectric wherein at least one of the first electrode and the second electrode is formed from the porous ICCN composite.

SUMMARY

The present invention provides for an energy storage device according to claim 1 and a method of fabricating the energy storage as set forth with claim 10.

Embodiments of the invention are set forth with the appended dependent claims.

The present disclosure further details several exemplary embodiments of energy storage devices and method of fabrication thereof that may fall outside the scope of the invention according to the appended claims but are useful to understand the invention.

The present disclosure provides aqueous energy storage devices. In some embodiments, the aqueous energy storage devices comprise symmetric supercapacitors operating at ultrahigh voltages of high specific capacitances. In some embodiments, the electrodes and electrolytes of the supercapacitors work synergistically towards improving not only the capacitance of the electrodes but also the voltage and cycling stability of the supercapacitors.

In some embodiments, the aqueous energy storage devices comprise micro-supercapacitors. Also disclosed are methods of fabricating micro-supercapacitors with great potential for miniaturized electronics.

The present disclosure provides an effective strategy for designing and fabricating high-performance aqueous energy devices such as batteries, supercapacitors, and micro-supercapacitors through the rational design of the electrode materials. In some embodiments, the electrodes disclosed herein have been carefully designed so that energy-dense magnetite nanoparticles are hybridized with a three-dimensional form of graphene, resulting in electrodes with a high surface area, a high electronic conductivity, and a high content of energy-dense faradaic materials, which is ideal for energy storage. In some embodiments, the hybrid electrodes have been combined with a functional oxidation-reduction (redox) electrolyte to produce a redox supercapacitor with ultrahigh energy density. The present disclosure provides designs of the positive and the negative electrodes and the utilization of redox electrolytes to increase the voltage window and the charge storage capacity of the energy storage device.

One aspect provided herein is an energy storage device comprising two or more electrodes, wherein at least one electrode comprises a carbonaceous material and a faradaic, capacitive, or pseudo-capacitive material comprising magnetite nanoparticles, wherein at least one of the two or more electrodes comprises a magnetite content of from 20% to 80%, and a redox-active electrolyte. In some embodiments, the energy storage device is a battery, a supercapacitor, and/or a micro-supercapacitor.

In some embodiments, the carbonaceous material comprises an interconnected corrugated carbon-based network. In some embodiments, the carbonaceous material comprises laser-scribed graphene (LSG).

In some embodiments, the redox-active electrolyte comprises fluorine, manganese, chlorine, chromium, oxygen, silver, iron, iodine, copper, tin, quinone, bromine, iodine, vanadium, or combinations thereof. In some embodiments, the redox-active electrolyte comprises potassium ferrocyanide, hydroquinone, vanadyl sulfate, p-phenylenediamine, p-phenylenediimine, potassium iodide, potassium bromide, copper chloride, hydroquinone, copper sulfate, heptylviologen dibromide, methyl viologen bromide, or any combination thereof. In some embodiments, the redox-active electrolyte comprises ferric cations. In some embodiments, the redox-active electrolyte comprises $Fe(CN)_6^{3-}/Fe(CN)_6^{4-}$. In some embodiments, the redox-active electrolyte comprises an aqueous solution. In some embodiments, the aqueous solution comprises sulfate ions. In some embodiments, the aqueous solution comprises sodium ions. In some embodiments, the aqueous solution comprises $Na_2SO_4$. In some embodiments, the redox-active electrolyte comprises $Fe(CN)_6^{3-}/Fe(CN)_6^{4-}$ and $Na_2SO_4$.

In some embodiments, the carbonaceous material comprises LSG; and the redox-active electrolyte comprises $Fe(CN)_6^{3-}/Fe(CN)_6^{4-}$ and $Na_2SO_4$.

In some embodiments, the at least one electrode comprises a magnetite content of at least about 20%, about 25%, about 30%, about 35%, about 40%, about 45%, about 50%, about 55%, about 60%, or about 70%. In some embodiments, the at least one electrode comprises a magnetite content of at most about 25%, about 30%, about 35%, about 40%, about 45%, about 50%, about 55%, about 60%, about 70%, or about 80%. In some embodiments, the at least one electrode comprises a magnetite content of about 20% to about 25%, about 20% to about 30%, about 20% to about 35%, about 20% to about 40%, about 20% to about 45%, about 20% to about 50%, about 20% to about 55%, about 20% to about 60%, about 20% to about 70%, about 20% to about 80%, about 25% to about 30%, about 25% to about 35%, about 25% to about 40%, about 25% to about 45%, about 25% to about 50%, about 25% to about 55%, about 25% to about 60%, about 25% to about 70%, about 25% to about 80%, about 30% to about 35%, about 30% to about 40%, about 30% to about 45%, about 30% to about 50%, about 30% to about 55%, about 30% to about 60%, about 30% to about 70%, about 30% to about 80%, about 35% to about 40%, about 35% to about 45%, about 35% to about 50%, about 35% to about 55%, about 35% to about 60%, about 35% to about 70%, about 35% to about 80%, about 40% to about 45%, about 40% to about 50%, about 40% to about 55%, about 40% to about 60%, about 40% to about 70%, about 40% to about 80%, about 45% to about 50%, about 45% to about 55%, about 45% to about 60%, about 45% to about 70%, about 45% to about 80%, about 50% to about 55%, about 50% to about 60%, about 50% to about 70%, about 50% to about 80%, about 55% to about 60%, about 55% to about 70%, about 55% to about 80%, about 60% to about 70%, about 60% to about 80%, or about 70% to about 80%. In some embodiments, the at least one electrode comprises a magnetite content of about 20%, about 25%, about 30%, about 35%, about 40%, about 45%, about 50%, about 55%, about 60%, about 70%, or about 80%.

In some embodiments, the at least one electrode possesses a magnetic moment.

In some embodiments, the energy storage device has an operational voltage of about 0.9 V to about 3 V. In some embodiments, the energy storage device has an operational voltage of at least about 0.9 V about 1 V, about 1.25 V, about 1.5 V, about 1.75 V, about 2 V, about 2.25 V, about 2.5 V, about 2.75 V, or about 3 V. In some embodiments, the energy storage device has an operational voltage of at most about 0.9 V about 1 V, about 1.25 V, about 1.5 V, about 1.75 V, about 2 V, about 2.25 V, about 2.5 V, about 2.75 V, or about 3 V. In some embodiments, the energy storage device has an operational voltage of about 0.9 V to about 1 V, about 0.9 V to about 1.25 V, about 0.9 V to about 1.5 V, about 0.9 V to about 1.75 V, about 0.9 V to about 2 V, about 0.9 V to about 2.25 V, about 0.9 V to about 2.5 V, about 0.9 V to about 2.75 V, about 0.9 V to about 3 V, about 1 V to about 1.25 V, about 1 V to about 1.5 V, about 1 V to about 1.75 V, about 1 V to about 2 V, about 1 V to about 2.25 V, about 1 V to about 2.5 V, about 1 V to about 2.75 V, about 1 V to about 3 V, about 1.25 V to about 1.5 V, about 1.25 V to about 1.75 V, about 1.25 V to about 2 V, about 1.25 V to about 2.25 V, about 1.25 V to about 2.5 V, about 1.25 V to about 2.75 V, about 1.25 V to about 3 V, about 1.5 V to about 1.75 V, about 1.5 V to about 2 V, about 1.5 V to about 2.25 V, about 1.5 V to about 2.5 V, about 1.5 V to about 2.75 V, about 1.5 V to about 3 V, about 1.75 V to about 2 V, about 1.75 V to about 2.25 V, about 1.75 V to about 2.5 V, about 1.75 V to about 2.75 V, about 1.75 V to about 3 V, about 2 V to about 2.25 V, about 2 V to about 2.5 V, about 2 V to about 2.75 V, about 2 V to about 3 V, about 2.25 V to about 2.5 V, about 2.25 V to about 2.75 V, about 2.25 V to about 3 V, about 2.5 V to about 2.75 V, about 2.5 V to about 3 V, or about 2.75 V to about 3 V. In some embodiments, the energy storage device has an operational voltage of about 0.9 V, about 1 V, about 1.25 V, about 1.5 V, about 1.75 V, about 2 V, about 2.25 V, about 2.5 V, about 2.75 V, or about 3 V.

In some embodiments, the energy storage device has a specific capacitance of about 150 farads per gram (F/g) to about 1,400 F/g. In some embodiments, the energy storage device has a specific capacitance of at least about 150 F/g. In some embodiments, the energy storage device has a specific capacitance of at most about 1,400 F/g. In some embodiments, the energy storage device has a specific capacitance of about 150 F/g to about 200 F/g, about 150 F/g to about 300 F/g, about 150 F/g to about 400 F/g, about 150 F/g to about 500 F/g, about 150 F/g to about 600 F/g, about 150 F/g to about 800 F/g, about 150 F/g to about 1,000 F/g, about 150 F/g to about 1,200 F/g, about 150 F/g to about 1,400 F/g, about 200 F/g to about 300 F/g, about 200 F/g to about 400 F/g, about 200 F/g to about 500 F/g, about 200 F/g to about 600 F/g, about 200 F/g to about 800 F/g, about 200 F/g to about 1,000 F/g, about 200 F/g to about 1,200 F/g, about 200 F/g to about 1,400 F/g, about 300 F/g to about 400 F/g, about 300 F/g to about 500 F/g, about 300 F/g to about 600 F/g, about 300 F/g to about 800 F/g, about 300 F/g to about 1,000 F/g, about 300 F/g to about 1,200 F/g, about 300 F/g to about 1,400 F/g, about 400 F/g to about 500 F/g, about 400 F/g to about 600 F/g, about 400 F/g to about 800 F/g, about 400 F/g to about 1,000 F/g, about 400 F/g to about 1,200 F/g, about 400 F/g to about 1,400 F/g, about 500 F/g to about 600 F/g, about 500 F/g to about 800 F/g, about 500 F/g to about 1,000 F/g, about 500 F/g to about 1,200 F/g, about 500 F/g to about 1,400 F/g, about 600 F/g to about 800 F/g, about 600 F/g to about 1,000 F/g, about 600 F/g to about 1,200 F/g, about 600 F/g to about 1,400 F/g, about 800 F/g to about 1,000 F/g, about 800 F/g to about 1,200 F/g, about 800 F/g to about 1,400 F/g, about 1,000 F/g to about 1,200 F/g, about 1,000 F/g to about 1,400 F/g, or about 1,200 F/g to about 1,400 F/g. In some embodiments, the energy storage device has a specific capacitance of about 150 F/g, about 200 F/g, about 300 F/g, about 400 F/g, about 500 F/g, about 600 F/g, about 800 F/g, about 1,000 F/g, about 1,200 F/g, or about 1,400 F/g.

In some embodiments, the energy storage device has an energy density of about 45 watt-hours per kilogram (Wh/kg) to about 250 Wh/kg. In some embodiments, the energy storage device has an energy density of at least about 45 Wh/kg, about 50 Wh/kg, about 75 Wh/kg, about 100 Wh/kg, about 125 Wh/kg, about 150 Wh/kg, about 175 Wh/kg, about 200 Wh/kg, about 225 Wh/kg, or about 250 Wh/kg. In some embodiments, the energy storage device has an energy density of at most about 45 Wh/kg, about 50 Wh/kg, about 75 Wh/kg, about 100 Wh/kg, about 125 Wh/kg, about 150 Wh/kg, about 175 Wh/kg, about 200 Wh/kg, about 225 Wh/kg, or about 250 Wh/kg. In some embodiments, the energy storage device has an energy density of about 45 Wh/kg to about 50 Wh/kg, about 45 Wh/kg to about 75 Wh/kg, about 45 Wh/kg to about 100 Wh/kg, about 45 Wh/kg to about 125 Wh/kg, about 45 Wh/kg to about 150 Wh/kg, about 45 Wh/kg to about 175 Wh/kg, about 45 Wh/kg to about 200 Wh/kg, about 45 Wh/kg to about 225 Wh/kg, about 45 Wh/kg to about 250 Wh/kg, about 50 Wh/kg to about 75 Wh/kg, about 50 Wh/kg to about 100 Wh/kg, about 50 Wh/kg to about 125 Wh/kg, about 50 Wh/kg to about 150 Wh/kg, about 50 Wh/kg to about 175 Wh/kg, about 50 Wh/kg to about 200 Wh/kg, about 50 Wh/kg to about 225 Wh/kg, about 50 Wh/kg to about 250 Wh/kg, about 75 Wh/kg to about 100 Wh/kg, about 75 Wh/kg to about 125 Wh/kg, about 75 Wh/kg to about 150 Wh/kg, about 75 Wh/kg to about 175 Wh/kg, about 75 Wh/kg to about 200 Wh/kg, about 75 Wh/kg to about 225 Wh/kg, about 75 Wh/kg to about 250 Wh/kg, about 100 Wh/kg to about 125 Wh/kg, about 100 Wh/kg to about 150 Wh/kg, about 100 Wh/kg to about 175 Wh/kg, about 100 Wh/kg to about 200 Wh/kg, about 100 Wh/kg to about 225 Wh/kg, about 100 Wh/kg to about 250 Wh/kg, about 125 Wh/kg to about 150 Wh/kg, about 125 Wh/kg to about 175 Wh/kg, about 125 Wh/kg to about 200 Wh/kg, about 125 Wh/kg to about 225 Wh/kg, about 125 Wh/kg to about 250 Wh/kg, about 150 Wh/kg to about 175 Wh/kg, about 150 Wh/kg to about 200 Wh/kg, about 150 Wh/kg to about 225 Wh/kg, about 150 Wh/kg to about 250 Wh/kg, about 175 Wh/kg to about 200 Wh/kg, about 175 Wh/kg to about 225 Wh/kg, about 175 Wh/kg to about 250 Wh/kg, about 200 Wh/kg to about 225 Wh/kg, about 200 Wh/kg to about 250 Wh/kg, or about 225 Wh/kg to about 250 Wh/kg. In some embodiments, the energy storage device has an energy density of about 45 Wh/kg, about 50 Wh/kg, about 75 Wh/kg, about 100 Wh/kg, about 125 Wh/kg, about 150 Wh/kg, about 175 Wh/kg, about 200 Wh/kg, about 225 Wh/kg, or about 250 Wh/kg.

In some embodiments, the energy storage device has a power density of about 45 watts per kilogram (W/kg) to about 200 W/kg. In some embodiments, the energy storage device has a power density of at least about 45 W/kg, about 50 W/kg, about 75 W/kg, about 100 W/kg, about 125 W/kg, about 150 W/kg, about 175 W/kg, or about 200 W/kg. In some embodiments, the energy storage device has a power density of at most about 45 W/kg, about 50 W/kg, about 75 W/kg, about 100 W/kg, about 125 W/kg, about 150 W/kg, about 175 W/kg, or about 200 W/kg. In some embodiments, the energy storage device has a power density of about 45 W/kg to about 50 W/kg, about 45 W/kg to about 75 W/kg, about 45 W/kg to about 100 W/kg, about 45 W/kg to about 125 W/kg, about 45 W/kg to about 150 W/kg, about 45 W/kg to about 175 W/kg, about 45 W/kg to about 200 W/kg, about 50 W/kg to about 75 W/kg, about 50 W/kg to about 100 W/kg, about 50 W/kg to about 125 W/kg, about 50 W/kg to about 150 W/kg, about 50 W/kg to about 175 W/kg, about 50 W/kg to about 200 W/kg, about 75 W/kg to about 100 W/kg, about 75 W/kg to about 125 W/kg, about 75 W/kg to about 150 W/kg, about 75 W/kg to about 175 W/kg, about 75 W/kg to about 200 W/kg, about 100 W/kg to about 125 W/kg, about 100 W/kg to about 150 W/kg, about 100 W/kg to about 175 W/kg, about 100 W/kg to about 200 W/kg, about 125 W/kg to about 150 W/kg, about 125 W/kg to about 175 W/kg, about 125 W/kg to about 200 W/kg, about 150 W/kg to about 175 W/kg, about 150 W/kg to about 200 W/kg, or about 175 W/kg to about 200 W/kg. In some embodiments, the energy storage device has a power density of about 45 W/kg, about 50 W/kg, about 75 W/kg, about 100 W/kg, about 125 W/kg, about 150 W/kg, about 175 W/kg, or about 200 W/kg. In some embodiments, the energy storage device has a power density of about 93 Wh/kg.

In some embodiments, the energy storage device has a specific capacitance of about 1489 F $g^{-1}$ (570 mF $cm^{-2}$) at 8 milliamperes per square centimeter (mA $cm^{-2}$). In some embodiments, the energy storage device has a specific capacitance of about 25.6 farad per cubic centimeter (F $cm^{-3}$; 716 F $g^{-1}$ electrode) at a scan rate of 20 mV $s^{-1}$. In some embodiments, the energy storage device has a specific capacitance of about 19.2 F $cm^{-3}$ (535 F $g^{-1}$ electrode) at a high scan rate of 300 mV $s^{-1}$.

In some embodiments, the energy storage device comprises at least one electrode comprising LSG and magnetite. In further embodiments, the energy storage device has a specific capacitance of about 114 F/g, about 87.2 mF/$cm^2$, and/or about 12.0 F/$cm^3$, at a scan rate of 20 mV/s. In further embodiments, the energy storage device has an energy density of about 72.5 Wh/kg and/or about 0.00765 Wh/$cm^3$, at a scan rate of 20 mV/s. In further embodiments, the energy storage device has a power density of 39.6 kilowatts per kilogram (kW/kg) and/or 4.18 W/$cm^3$, at a scan rate of 300 mV/s.

In some embodiments, the energy storage device comprises at least one electrode comprising LSG and magnetite and a redox-active electrolyte. In further embodiments, the energy storage device has a specific capacitance of about 178.9 F/g, about 186.1 mF/cm$^2$, and/or about 25.6 F/cm$^3$, at a scan rate of 20 mV/s. In further embodiments, the energy storage device has an energy density of about 121.5 Wh/kg and/or about 0.0174 Wh/cm$^3$, at a scan rate of 20 mV/s. In further embodiments, the energy storage device has a power density of 55.9 kW/kg and/or 8.03 W/cm$^3$, at a scan rate of 300 mV/s.

In some embodiments, the energy storage device comprises at least one electrode comprising LSG and magnetite and a redox-active electrolyte. In further embodiments, the energy storage device has a specific capacitance of about 178.9 F/g, about 186.1 mF/cm$^2$, and/or about 25.6 F/cm$^3$, at a scan rate of 20 mV/s. In further embodiments, the energy storage device has an energy density of about 121.5 Wh/kg and/or about 0.0174 Wh/cm$^3$, at a scan rate of 20 mV/s. In further embodiments, the energy storage device has a power density of 55.9 kW/kg and/or 8.03 W/cm$^3$, at a scan rate of 300 mV/s.

In some embodiments, the energy storage device comprises at least one electrode comprising LSG and magnetite and a redox-active electrolyte. In further embodiments, the energy storage device has a specific capacitance of about 178.9 F/g, about 186.1 mF/cm$^2$ and/or about 25.6 F/cm$^3$, at a scan rate of 20 mV/s. In further embodiments, the energy storage device has an energy density of about 121.5 Wh/kg and/or about 0.0174 Wh/cm$^3$, at a scan rate of 20 mV/s. In further embodiments, the energy storage device has a power density of 55.9 kW/kg and/or 8.03 W/cm$^3$, at a scan rate of 300 mV/s.

In some embodiments, the carbonaceous material comprises an interconnected corrugated carbon-based network, LSG, a cellular graphene film, a holey graphene framework, a three-dimensional graphene framework, a solvated graphene framework, or any combination thereof.

In some embodiments, the electrode comprises a magnetite content of about 40% to about 85%. In some embodiments, the electrode comprises a magnetite content of at least 40%, about 45%, about 50%, about 55%, about 60%, about 65%, about 70%, about 75%, about 80%, or about 85%. In some embodiments, the electrode comprises a magnetite content of at most 40%, about 45%, about 50%, about 55%, about 60%, about 65%, about 70%, about 75%, about 80%, or about 85%. In some embodiments, the electrode comprises a magnetite content of about 40% to about 45%, about 40% to about 50%, about 40% to about 55%, about 40% to about 60%, about 40% to about 65%, about 40% to about 70%, about 40% to about 75%, about 40% to about 80%, about 40% to about 85%, about 45% to about 50%, about 45% to about 55%, about 45% to about 60%, about 45% to about 65%, about 45% to about 70%, about 45% to about 75%, about 45% to about 80%, about 45% to about 85%, about 50% to about 55%, about 50% to about 60%, about 50% to about 65%, about 50% to about 70%, about 50% to about 75%, about 50% to about 80%, about 50% to about 85%, about 55% to about 60%, about 55% to about 65%, about 55% to about 70%, about 55% to about 75%, about 55% to about 80%, about 55% to about 85%, about 60% to about 65%, about 60% to about 70%, about 60% to about 75%, about 60% to about 80%, about 60% to about 85%, about 65% to about 70%, about 65% to about 75%, about 65% to about 80%, about 65% to about 85%, about 70% to about 75%, about 70% to about 80%, about 70% to about 85%, about 75% to about 80%, about 75% to about 85%, or about 80% to about 85%. In some embodiments, the electrode comprises a magnetite content of about 40%, about 45%, about 50%, about 55%, about 60%, about 65%, about 70%, about 75%, about 80%, or about 85%.

In some embodiments, the electrode has an areal specific capacitance in a negative voltage window of about 264 millifarads per square centimeter (mF cm$^{-2}$; about 691 farads per gram [F g$^{-1}$]) at a scan rate of about 20 millivolts per second (mV s$^{-1}$). In some embodiments, the electrode has an areal specific capacitance in a positive voltage window of about 137 mF cm$^{-2}$ (about 357 F g$^{-1}$) at a scan rate of about 20 mV s$^{-1}$.

The areal specific capacitances of the LSG/Fe$_3$O$_4$ electrode in the negative and positive voltage windows are about 264 mF cm$^{-2}$ (about 691 F g$^{-1}$) and about 137 mF cm$^{-2}$ (about 357 F g$^{-1}$) at a scan rate of about 20 mV s$^{-1}$, respectively.

Another aspect provided herein is a method of fabricating an energy storage device according to the invention comprising sonicating a solution comprising a carbon-based oxide and a metallic salt; disposing the solution comprising a carbon-based oxide and a metallic salt onto a substrate; drying the substrate to create a dried film comprising a carbon-based oxide and a metallic salt; and exposing a portion of the dried film to light to reduce the carbon-based oxide and oxidize the metallic salt. In some embodiments, the carbon-based oxide is graphene oxide.

In some embodiments, the carbon-based oxide is graphene oxide. In some embodiments, the concentration of the graphene oxide is about 1 gram per liter (g/L) to about 5 g/L. In some embodiments, the concentration of the graphene oxide is at least about 1 g/L. In some embodiments, the concentration of the graphene oxide is at most about 5 g/L. In some embodiments, the concentration of the graphene oxide is about 1 g/L to about 1.5 g/L, about 1 g/L to about 2 g/L, about 1 g/L to about 2.5 g/L, about 1 g/L to about 3 g/L, about 1 g/L to about 3.5 g/L, about 1 g/L to about 4 g/L, about 1 g/L to about 4.5 g/L, about 1 g/L to about 5 g/L, about 1.5 g/L to about 2 g/L, about 1.5 g/L to about 2.5 g/L, about 1.5 g/L to about 3 g/L, about 1.5 g/L to about 3.5 g/L, about 1.5 g/L to about 4 g/L, about 1.5 g/L to about 4.5 g/L, about 1.5 g/L to about 5 g/L, about 2 g/L to about 2.5 g/L, about 2 g/L to about 3 g/L, about 2 g/L to about 3.5 g/L, about 2 g/L to about 4 g/L, about 2 g/L to about 4.5 g/L, about 2 g/L to about 5 g/L, about 2.5 g/L to about 3 g/L, about 2.5 g/L to about 3.5 g/L, about 2.5 g/L to about 4 g/L, about 2.5 g/L to about 4.5 g/L, about 2.5 g/L to about 5 g/L, about 3 g/L to about 3.5 g/L, about 3 g/L to about 4 g/L, about 3 g/L to about 4.5 g/L, about 3 g/L to about 5 g/L, about 3.5 g/L to about 4 g/L, about 3.5 g/L to about 4.5 g/L, about 3.5 g/L to about 5 g/L, about 4 g/L to about 4.5 g/L, about 4 g/L to about 5 g/L, or about 4.5 g/L to about 5 g/L.

In some embodiments, the substrate comprises gold-sputtered polyimide. In some embodiments, the substrate comprises aluminum, nickel, copper, platinum, steel, or combinations thereof. In some embodiments, the substrate comprises a carbon substrate. In some embodiments, the substrate is graphite.

In some embodiments, the drying of the substrate occurs at a temperature of about 20° C to about 100° C. In some embodiments, the drying of the substrate occurs at a temperature of at least about 20° C. In some embodiments, the drying of the substrate occurs at a temperature of at most about 100° C. In some embodiments, the drying of the substrate occurs at a temperature of about 20° C to about 30° C, about 20° C to about 40° C, about 20° C to about 50° C, about 20° C to about 60° C, about 20° C to about 70° C, about 20° C to about 80° C, about 20° C to about 90° C, about 20° C to about 100° C, about 30° C to about 40° C, about 30° C to about 50° C, about 30° C to about 60° C, about 30° C to about 70° C, about 30° C to about 80° C, about 30° C to about 90° C, about 30° C to about 100° C, about 40° C to about 50° C, about 40° C to about 60° C, about 40° C to about 70° C, about 40° C to about 80° C, about 40° C to about 90° C, about 40° C to about 100° C, about 50° C to about 60° C, about 50° C to about 70° C, about 50° C to about 80° C, about 50° C to about 90° C, about 50° C to about 100° C, about 60° C to about 70° C, about 60° C to about 80° C, about 60° C to about 90° C, about 60° C to about 100° C, about 70° C to about 80° C, about 70° C to about 90° C, about 70° C to about 100° C, about 80° C to about 90° C, about 80° C to about 100° C, or about 90° C to about 100° C.

In some embodiments, the light has a wavelength of about 0.01 micrometer ($\mu$m) to about 100 $\mu$m. In some embodiments, the light has a wavelength of at least about 0.01 $\mu$m. In some embodiments, the light has a wavelength of at most about 100 $\mu$m. In some embodiments, the light has a wavelength of about 0.01 $\mu$m to about 0.05 $\mu$m, about 0.01 $\mu$m to about 0.1 $\mu$m, about 0.01 $\mu$m to about 0.5 $\mu$m, about 0.01 $\mu$m to about 1 $\mu$m, about 0.01 $\mu$m to about 10 $\mu$m, about 0.01 $\mu$m to about 50 $\mu$m, about 0.01 $\mu$m to about 100 $\mu$m, about 0.05 $\mu$m to about 0.1 $\mu$m, about 0.05 $\mu$m to about 0.5 $\mu$m, about 0.05 $\mu$m to about 1 $\mu$m, about 0.05 $\mu$m to about 10 $\mu$m, about 0.05 $\mu$m to about 50 $\mu$m, about 0.05 $\mu$m to about 100 $\mu$m, about 0.1 $\mu$m to about 0.5 $\mu$m, about 0.1 $\mu$m to about 1 $\mu$m, about 0.1 $\mu$m to about 10 $\mu$m, about 0.1 $\mu$m to about 50 $\mu$m, about 0.1 $\mu$m to about 100 $\mu$m, about 0.5 $\mu$m to about 1 $\mu$m, about 0.5 $\mu$m to about 10 $\mu$m, about 0.5 $\mu$m to about 50 $\mu$m, about 0.5 $\mu$m to about 100 $\mu$m, about 1 $\mu$m to about 10 $\mu$m, about 1 $\mu$m to about 50 $\mu$m, about 1 $\mu$m to about 100 $\mu$m, about 10 $\mu$m to about 50 $\mu$m, about 10 $\mu$m to about 100 $\mu$m, or about 50 $\mu$m to about 100 $\mu$m.

In some embodiments, the light is emitted from a laser. In further embodiments, the laser is a 7 watt (W) carbon dioxide ($CO_2$) laser.

In some embodiments, the method of fabricating further comprises washing the dried film with deionized water.

In some embodiments, the energy storage device is a battery, a supercapacitor, and/or a micro-supercapacitor.

**BRIEF DESCRIPTION OF THE DRAWINGS**

Energy storage devices and methods of fabricating the energy storage devices according to the invention are set forth with the appended claims. A better understanding of the features and advantages of the present invention according to the appended claims will be obtained by reference to the following detailed description that sets forth embodiments of the invention according to the appended claims and further exemplary, illustrative embodiments that may fall outside scope of the claimed energy storage devices and methods of fabricating thereof but are useful to understand the invention according to the appended claims, and in which the principles of the disclosure are utilized, and the accompanying drawings or figures (also "FIG." and "FIGs." herein), of which:

FIG. 1 shows a schematic illustration of an exemplary method for laser-scribed graphene (LSG)/$Fe_3O_4$ nanocomposite electrodes, in accordance with some embodiments.

FIG. 2A shows thermo-gravimetric analysis (TGA) and a differential thermal analysis (DTA) measurements of the deoxygenation of graphene oxide (GO), in accordance with some embodiments.

FIG. 2B shows TGA and DTA measurements of the formation of iron oxide from the $FeCl_3$.

FIG. 2C shows TGA and DTA measurements of the spontaneous, simultaneous reduction of GO to reduced GO (r-GO) and the oxidation of $FeCl_3$ to iron oxide.

FIG. 3A shows a scanning electron microscope (SEM) image of exemplary $Fe_3O_4$ nanoparticles grown on LSG, in accordance with some embodiments.

FIG. 3B shows a high-magnification SEM image of an exemplary LSG/$Fe_3O_4$ nanocomposite, in accordance with some embodiments.

FIG. 3C shows a transverse electromagnetic (TEM) image of the exemplary LSG/$Fe_3O_4$ nanocomposite of FIG. 3B,

in accordance with some embodiments.

**FIG. 3D** shows a high-resolution TEM image of a selected electron area diffraction pattern of an exemplary $Fe_3O_4$ in the LSG composite, in accordance with some embodiments.

**FIG. 3E** shows an X-ray diffraction pattern of the exemplary $LSG/Fe_3O_4$ nanocomposite of **FIG. 3B,** in accordance with some embodiments.

**FIG. 3F** shows a photograph of an exemplary $LSG/Fe_3O_4$ nanocomposite dispersed in an aqueous solution without and with an external magnetic field, in accordance with some embodiments.

**FIG. 4A** shows a cross-sectional SEM image of an exemplary $LSG/Fe_3O_4$ film on a plastic substrate, in accordance with some embodiments.

**FIG. 4B** shows an exemplary high-resolution TEM image of the d-spacing of an exemplary $Fe_3O_4$ electrode, in accordance with some embodiments.

**FIG. 5** shows a TGA of an exemplary $LSG/Fe_3O_4$ nanocomposite, in accordance with some embodiments.

**FIG. 6A** shows cyclic voltammetry (CV) curves of an exemplary LSG supercapacitor and an exemplary $LSG/Fe_3O_4$ supercapacitor at 50 millivolts per second (mV s$^{-1}$), in accordance with some embodiments.

**FIG. 6B** shows CV curves of the exemplary LSG supercapacitor and an exemplary $LSG/Fe_3O_4$ supercapacitor of **FIG. 6A** at 70 mV s$^{-1}$, in accordance with some embodiments.

**FIG. 7A** shows CV curves of the negative voltage window (0 V to -1.0 V vs. Ag/AgCl) of an exemplary three $LSG/Fe_3O_4$ electrode device in 1.0 M $Na_2SO_4$ at different scan rates of 10, 20, 30, 50, 70, and 100 mV s$^{-1}$.

**FIG. 7B** shows the same CV curves of the positive voltage window (0 V to 0.8 V vs. Ag/AgCl) of the device of **FIG. 7A** at different scan rates of 10, 20, 30, 50, 70, and 100 mV s$^{-1}$.

**FIG. 7C** shows charge-discharge (CC) curves of the negative voltage window (0 V to -1.0 V vs. Ag/AgCl) of an exemplary $LSG/Fe_3O_4$ electrode at different current densities.

**FIG. 7D** shows the same CC curves of the positive voltage window (0 V to 0.8 V vs. Ag/AgCl) of an exemplary $LSG/Fe_3O_4$ electrode at different current densities.

**FIG. 8A** shows an exemplary $LSG/Fe_3O_4$ supercapacitors using 1.0 M $Na_2SO_4$ electrolyte in the absence of a redox additive, and in the presence of a redox additive, in accordance with some embodiments.

**FIG. 8B** shows CV curves of the exemplary $LSG/Fe_3O_4$ supercapacitor of **FIG. 8A** at various redox additive concentrations, at a scan rate of 50 mV s$^{-1}$, in accordance with some embodiments.

**FIG. 8C** shows CC curves of the exemplary $LSG/Fe_3O_4$ supercapacitor of **FIG. 8A** at various redox additive concentrations, at a current density of 8 mA cm$^{-2}$, in accordance with some embodiments.

**FIG. 8D** shows the specific capacitance by area and active material mass vs. current density for an exemplary $LSG/Fe_3O_4$ electrode in 1.0 M $Na_2SO_4$ and different concentrations of the redox additive, measured in a three-electrode setup, in accordance with some embodiments.

**FIG. 8E** shows CV curves at 20 mV s$^{-1}$ for an $LSG/Fe_3O_4$ electrode tested at different potential regions, in accordance with some embodiments.

**FIG. 8F** shows the areal capacitance and electric charge at a 10 mV s$^{-1}$ scan rate for the negative and positive electrodes in the absence and presence of a 0.025 M redox additive.

**FIG. 8G** shows CV curves of an exemplary symmetric supercapacitor comprising $LSG/Fe_3O_4$ electrodes at a scan rate of 50 mV s$^{-1}$, in accordance with some embodiments.

**FIG. 8H** shows CC curves of an exemplary symmetric supercapacitor comprising $LSG/Fe_3O_4$ electrodes at a current density of 12 mA cm$^{-2}$, in accordance with some embodiments.

**FIG. 8I** shows areal capacitance and stack capacitance of an exemplary symmetric supercapacitor comprising $LSG/Fe_3O_4$ electrodes as a function of the applied current density in the absence and in the presence of a 0.025 M redox additive, in accordance with some embodiments.

**FIG. 9A** shows galvanostatic CC curves at a current density of 4 milliamperes per square centimeter (mA cm$^{-2}$) of the exemplary LSG supercapacitor and an exemplary $LSG/Fe_3O_4$ supercapacitor of **FIG. 6A** at an increasing voltage window from 1.0 V to 1.8 V, in accordance with some embodiments.

**FIG. 9B** shows CV curves of an exemplary LSG and an exemplary $LSG/Fe_3O_4$ supercapacitor at 100 mV s$^{-1}$, in accordance with some embodiments.

**FIG. 10A** shows the CV curves of an exemplary symmetric LSG supercapacitor measured to 1.8 V with 1.0 M $Na_2SO_4$ aqueous electrolyte at a scan rate of 100 mV s$^{-1}$.

**FIG. 10B** shows the CV curves of an exemplary $Fe_3O_4$ supercapacitor measured to 1.8 V with 1.0 M $Na_2SO_4$ aqueous electrolyte at a scan rate of 100 mV s$^{-1}$.

**FIG. 11A** shows CV curves of an exemplary $LSG/Fe_3O_4$ supercapacitor at scan rates of 10, 20, 30, 50, 70, and 100 mV s$^{-1}$, in accordance with some embodiments.

**FIG. 11B** shows CV curves of an exemplary $LSG/Fe_3O_4$ supercapacitor at scan rates of 200, 300, 500, 700, and 1000 mV s$^{-1}$, at a maximum voltage of 1.8 V, in accordance with some embodiments.

**FIG. 12A** shows CV curves of an exemplary symmetric $LSG/Fe_3O_4$ supercapacitor at scan rates of 1.5, 2.0, 5.0, 7.0, and 10 V s$^{-1}$.

**FIG. 12B** shows CC curves of the exemplary symmetric LSG/Fe$_3$O$_4$ supercapacitor of **FIG. 12A** at current densities of 4, 8, 12, 16, and 20 mA cm$^{-2}$.

**FIG. 12C** shows CC curves of the exemplary symmetric LSG/Fe$_3$O$_4$ supercapacitor of **FIG. 12A** at current densities of 40, 60, 80, 100, and 120 mA cm$^{-2}$.

**FIG. 12D** shows CC curves of the exemplary symmetric LSG/Fe$_3$O$_4$ supercapacitor of **FIG. 12A** at current densities of 160, 240, 320 and 400 mA cm$^{-2}$.

**FIG. 12E** shows the active material mass specific capacitance of an exemplary electrode in an exemplary symmetric LSG/Fe$_3$O$_4$ supercapacitor vs. current density.

**FIG. 12F** shows the active material mass specific capacitance of an exemplary electrode in an exemplary symmetric LSG/Fe$_3$O$_4$ supercapacitor vs. scan rate.

**FIG. 13A** shows a Nyquist plot with a magnified high-frequency region of an exemplary LSG/Fe$_3$O$_4$ symmetric supercapacitor over a frequency range from 1 MHz to 0.01 Hz, in accordance with some embodiments.

**FIG. 13B** shows Bode plots of an exemplary LSG/Fe$_3$O$_4$ symmetric supercapacitor over a frequency range from 1 MHz to 0.01 Hz, in accordance with some embodiments.

**FIG. 13C** shows CV curves of an exemplary flexible LSG/Fe$_3$O$_4$ full cell at different bending radii and at a scan rate of 100 mV s$^{-1}$, in accordance with some embodiments.

**FIG. 14** shows exemplary CV curves of an LSG/Fe$_3$O$_4$ electrode with 1.0 M Na$_2$SO$_4$ electrolyte and 1.0 M Na$_2$SO$_4$ + 0.005 M [Fe(CN)$_6$$^{3-}$/Fe(CN)$_6$$^{4-}$] redox-active electrolyte, in accordance with some embodiments.

**FIG. 15** provides a Nyquist plot of the electrochemical impedance spectrum of an exemplary LSG/Fe$_3$O$_4$ electrode, with various concentrations of [Fe(CN)$_6$$^{3-}$/Fe(CN)$_6$$^{4-}$] redox-active electrolyte in 1.0 M Na$_2$SO$_4$ electrolyte, in accordance with some embodiments.

**FIG. 16A** shows CC curves of an exemplary symmetric LSG/Fe$_3$O$_4$ supercapacitor with various concentrations of the [Fe(CN)$_6$$^{3-}$/Fe(CN)$_6$$^{4-}$] redox-active electrolyte in 1.0 M Na$_2$SO$_4$ electrolyte at 12 mA cm$^{-2}$, in accordance with some embodiments.

**FIG. 16B** shows CV curves of an exemplary symmetric LSG/Fe$_3$O$_4$ supercapacitor with various concentrations of the [Fe(CN)$_6$$^{3-}$/Fe(CN)$_6$$^{4-}$] redox-active electrolyte at 50 mV s$^{-1}$, in accordance with some embodiments.

**FIG. 16C** shows the areal capacitance and coulombic efficiency at different concentrations of redox-active electrolyte as listed, based on the CC results, in accordance with some embodiments.

**FIG. 17A** shows CV curves of an exemplary symmetric LSG/Fe$_3$O$_4$ supercapacitor with 0.025 M redox-active electrolyte (RE) at different scan rates of 20 to 100 mV s$^{-1}$, in accordance with some embodiments.

**FIG. 17B** shows CV curves of an exemplary symmetric LSG/Fe$_3$O$_4$ supercapacitor with 0.025 M RE at different scan rates of 200 to 1000 mV s$^{-1}$, in accordance with some embodiments.

**FIG. 17C** shows CC curves of an exemplary symmetric LSG/Fe$_3$O$_4$ supercapacitor with 0.025 M RE at current densities of 12, 20, and 32 mA cm$^{-2}$, in accordance with some embodiments.

**FIG. 17D** shows the CC curves of an exemplary symmetric LSG/Fe$_3$O$_4$ supercapacitor with 0.025 M RE at current densities of 40, 48, 60, and 80 mA cm$^{-2}$, in accordance with some embodiments.

**FIG. 18A** shows self-discharge curves of an exemplary LSG/Fe$_3$O$_4$ supercapacitor with [Fe(CN)$_6$$^{3-}$/Fe(CN)$_6$$^{4-}$] redox-active electrolyte, in accordance with some embodiments.

**FIG. 18B** shows leakage current measurements of an exemplary LSG/Fe$_3$O$_4$ supercapacitor with [Fe(CN)$_6$$^{3-}$/Fe(CN)$_6$$^{4-}$] redox-active electrolyte, in accordance with some embodiments.

**FIG. 19A** shows an exemplary schematic illustration of a microfabrication process of forming a LSG/Fe$_3$O$_4$ hybrid micro-supercapacitor via laser irradiation, in accordance with some embodiments.

**FIG. 19B** shows a photograph of an exemplary micro-supercapacitor with the interdigitated pattern, in accordance with some embodiments.

**FIG. 19C** shows CV curves of an exemplary symmetric LSG/Fe$_3$O$_4$ micro-supercapacitor at a scan rate 100 mV s$^{-1}$, in accordance with some embodiments.

**FIG. 20A** shows CC curves for an exemplary LSG/Fe$_3$O$_4$ micro-supercapacitor with and without a redox electrolyte, at a current density of 4.8 mA cm$^{-2}$, in accordance with some embodiments.

**FIG. 20B** shows CC curves at different current densities for an exemplary LSG/Fe$_3$O$_4$ micro-supercapacitor with a 1.0 M Na$_2$SO$_4$ and 0.025 M RE electrolyte, in accordance with some embodiments.

**FIG. 20C** shows CV curves at different scan rates for an exemplary LSG/Fe$_3$O$_4$ micro-supercapacitor with a 1.0 M Na$_2$SO$_4$ and 0.025 M RE electrolyte, in accordance with some embodiments.

**FIG. 21A** shows a photograph of an exemplary micro-supercapacitor module with two cells connected in series that were made in a single step, in accordance with some embodiments.

**FIG. 21B** shows CV curves of an exemplary LSG/Fe$_3$O$_4$ hybrid micro-supercapacitor, in accordance with some embodiments.

**FIG. 21C** shows CC curves of two exemplary micro-supercapacitors connected in series, in accordance with some

embodiments.

**FIG. 22A** shows the potential range and specific capacitances of exemplary symmetric LSG/$Fe_3O_4$ supercapacitors without (SC) and with a redox additive (SC-RE), in accordance with some embodiments.

**FIG. 22B** shows a Ragone plot of the gravimetric energy density and power density of exemplary SC, SC-RE and a micro-supercapacitor (MSC-RE), in accordance with some embodiments.

**FIG. 22C** shows a Ragone plot comparing the volumetric energy density and power density of the exemplary supercapacitors with exemplary commercially available energy storage devices, in accordance with some embodiments.

**FIG. 22D** shows the cycling stability of an exemplary LSG/$Fe_3O_4$ supercapacitor with and without a redox-additive at 1.0 V and 1.8 V voltage windows, in accordance with some embodiments.

**FIG. 22E** shows photographs demonstrating that two exemplary tandem symmetric LSG/$Fe_3O_4$ supercapacitors connected in series can power light-emitting diodes of different colors, in accordance with some embodiments.

**FIG. 23A** shows an exemplary schematic cross-section illustration of an exemplary sandwich-type supercapacitor, in accordance with some embodiments.

**FIG. 23B** shows an exemplary schematic cross-section illustration of interdigitated micro-supercapacitor, in accordance with some embodiments.

## DETAILED DESCRIPTION

Provided herein are methods, devices, and devices for designing and fabricating electrodes comprising energy-dense faradaic materials and high-performance energy storage devices.

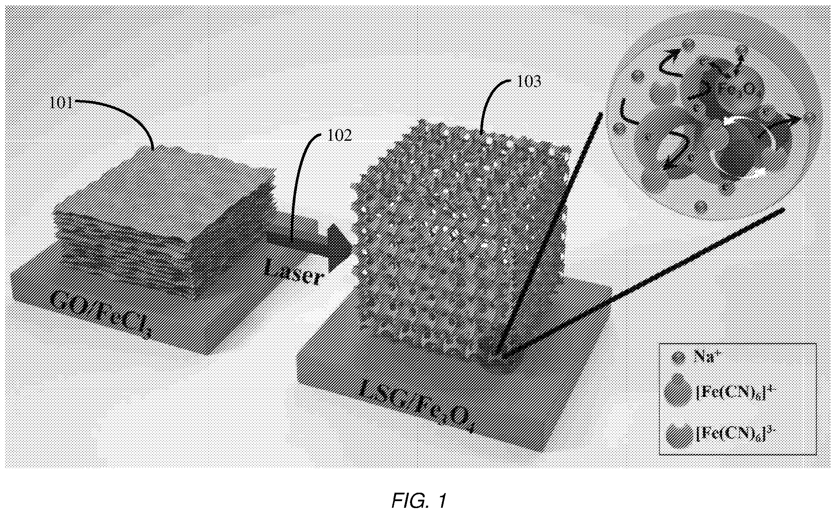

**FIG. 1** shows a schematic illustration of an exemplary method for laser-scribed graphene (LSG)/$Fe_3O_4$ nano-composite electrodes, in accordance with some embodiments. As seen the exemplary method comprises exposing a graphene oxide (GO)/$FeCl_3$ film **101** to a laser **102** to create an electrode **103** of LSG wrapped with $Fe_3O_4$ nanoparticles. In some embodiments, the laser is a 7 W $CO_2$ laser. This photothermal process is extremely fast and tunable to produce electrodes with a wide array of shapes and capacities.

Graphene oxide may be synthesized from graphite flakes using a modified Hummers' method whereby $FeCl_3 \cdot 6H_2O$ in a powder form is slowly added to a GO dispersion in water. In some embodiments the $FeCl_3 \cdot 6H_2O$ powder is added to a GO dispersion in water under continuous stirring. Some embodiments further comprise sonication. In some embodiments the sonication is performed for about 30 minutes.

In some embodiments the solution is then drop-cast onto a sheet. The sheet may comprise a gold-sputtered polyimide sheet. In some cases, the solution-covered sheet is dried and exposed to a laser to synthesize the LSG/$Fe_3O_4$ film. In some embodiments the solution-covered sheet is dried for about 12 hours. In some embodiments the solution-covered sheet is dried under ambient conditions. In some embodiments the laser comprises a 7 W $CO_2$ laser. An exemplary 7 W $CO_2$ laser employable for the methods herein is a Full Spectrum Laser H-series. The LSG/$Fe_3O_4$ film may then be washed with deionized water and directly used as a supercapacitor electrode. The electrodes, the active material (LSG/$Fe_3O_4$), and the current collector may then be patterned to form an interdigitated electrode. Patterning may be performed using a 24-W $CO_2$ laser. An exemplary 24-W $CO_2$ patterning laser for the methods herein is a Full Spectrum Laser H-series laser.

The resulting LSG/$Fe_3O_4$ can be used in combination with a redox-active electrolyte containing a [Fe(CN)$_6^{3-}$/Fe(CN)$_6^{4-}$] redox couple to form a supercapacitor device configured to store charge both through reversible redox reactions on the electrode side (pseudo-capacitive $Fe_3O_4$ nanoparticles) and the electrolyte side (redox additive).

Chemical reactions during LSG/$Fe_3O_4$ synthesis

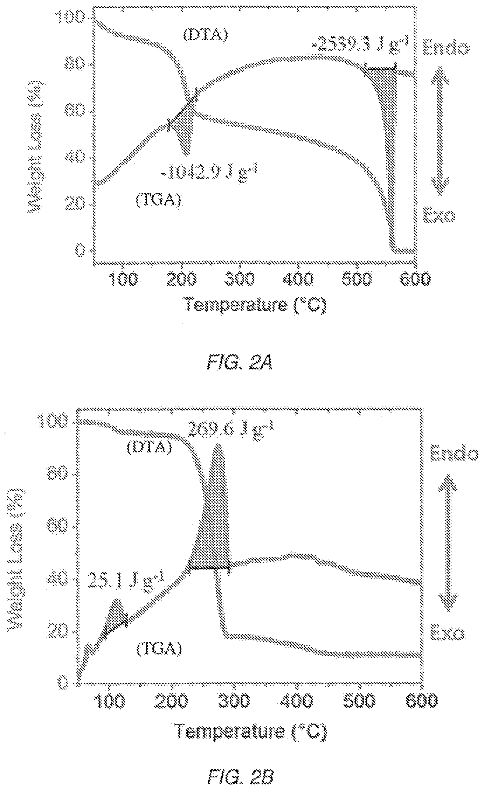

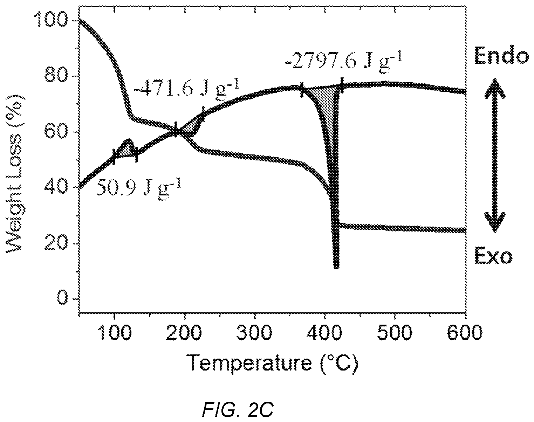

**FIG. 2A** shows thermo-gravimetric analysis (TGA) and differential thermal analysis (DTA) measurements of the deoxygenation of GO, in accordance with some embodiments. **FIG. 2B** shows TGA and DTA measurements of the formation of iron oxide from the $FeCl_3$. **FIG. 2C** shows TGA and DTA measurements of the spontaneous, simultaneous reduction of GO to reduced GO (r-GO) and the oxidation of $FeCl_3$ to iron oxide.

Per **FIG. 2A,** the thermal de-oxygenation of GO at about 210° C displays a large exothermic peak of about -1043 joules per gram (J g$^{-1}$), whereby the graphitic carbon is oxidized to produce $CO_2$ at about 550° C. The energy released from the de-oxygenation of GO works as an *in situ* power source to drive the oxidation reaction of $FeCl_3$. The heat required to drive the oxidation reaction of $FeCl_3$ to iron oxide, per **FIG. 2B,** is about 269.6 J g$^{-1}$, which is only about one fourth the heat released during the reduction of GO. Per **FIG. 2C,** the GO/$FeCl_3$ mixture shows an exothermic peak of about -471.6 J g$^{-1}$ at about 205° C, confirming the spontaneity of the redox reactions the *in situ* reduction of GO to r-GO, and the oxidation of $FeCl_3$ to iron oxide. As such, only a small amount of heat, about 50.9 J g$^{-1}$ as indicated by the endothermic peak at about 100° C, equivalent to a 7 W $CO_2$ laser, is required to initiate the reaction of the GO/$FeCl_3$ mixture. All measurements were performed under air.

Physical characterization of LSG/Fe$_3$O$_4$ nanocomposites

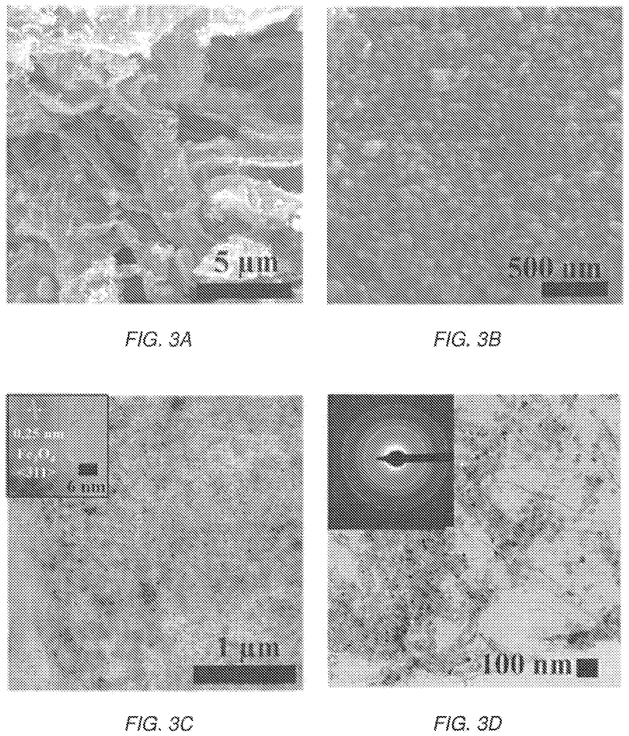

**FIG. 3A** shows a scanning electron microscope (SEM) image of an exemplary Fe$_3$O$_4$ nanoparticles grown on LSG, in accordance with some embodiments. As seen, the three-dimensional (3D) topography of the electrode forms a macro-porous network which provides large internal surface areas for charge storage. This 3D structure is also supported by the iron oxide nanoparticles that act as nano-spacers for the LSG network and provide enough space for the electrolyte ions to interact with the entire electroactive surface of the electrode, allowing for more efficient charge storage.

**FIG. 3B** shows a high-magnification SEM image of an exemplary LSG/Fe$_3$O$_4$, in accordance with some embodiments. As seen, the iron oxide nanoparticles are well dispersed within the conductive LSG framework, whereby the graphene forms a very strong (i.e., close) connection between each iron oxide nanoparticle. This strong bond prevents the aggregation of the iron oxide nanoparticles and the restacking of the graphene layers, to enhance electron transport and stability during cycling processes.

**FIG. 3C** shows a transverse electromagnetic (TEM) image of an exemplary LSG/Fe$_3$O$_4$ nanocomposite, in accordance with some embodiments. As seen, the exemplary laser synthesized LSG/Fe$_3$O$_4$ nanocomposite exhibits a uniform dispersion of iron oxide nanoparticles tightly bonded to the LSG. The inset in **FIG. 3C** further shows the <311> crystallinity of the exemplary LSG/Fe$_3$O$_4$ nanocomposite, and a d-spacing of about 0.25 nm. This unique structure provides an efficient pathway to capture the redox capacitance from Fe$_3$O$_4$ nanoparticles throughout the conductive LSG network.

**FIG. 3D** shows a high-resolution TEM image of an exemplary selected electron area diffraction pattern of an exemplary Fe$_3$O$_4$ in the LSG composite, in accordance with some embodiments. The inset of **FIG. 3D** shows that the d-spacings of the peaks that are calculated from the positions of the diffraction rings. These calculated peaks are in good agreement with reference data for Fe$_3$O$_4$ shown in Table 1.

Table 1

| Miller Index (hkl) | d-spacing (nm) | |
| --- | --- | --- |
| | Reference | Measured* |
| 220 | 0.296 | 0.297 |
| 311 | 0.253 | 0.253 |
| 400 | 0.210 | 0.210 |
| 422 | 0.171 | 0.171 |
| 511 | 0.161 | 0.161 |
| 440 | 0.148 | 0.148 |

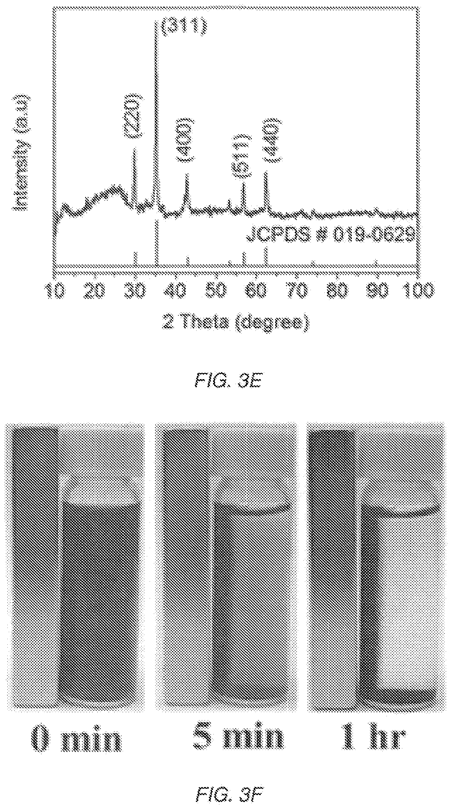

**FIG. 3E** shows an X-ray diffraction pattern of an exemplary LSG/Fe$_3$O$_4$ nanocomposite, in accordance with some embodiments. As seen, the diffraction peaks of the X-ray diffraction pattern of the exemplary LSG/Fe$_3$O$_4$ nano-composite are perfectly indexed to Fe$_3$O$_4$ (per JCPDS 019-0629) to confirm that the iron oxide nanoparticles are indeed Fe$_3$O$_4$. The LSG exhibits a weak broad peak at about 25° and unconverted GO peaks appear at about 11° to show the exemplary LSG/Fe$_3$O$_4$ nanocomposite is mainly composed of LSG and Fe$_3$O$_4$.

**FIG. 3F** shows a photograph of an exemplary LSG/Fe$_3$O$_4$ nanocomposite dispersed in an aqueous solution without and with an external magnetic field, in accordance with some embodiments. The magnetism of the LSG/Fe$_3$O$_4$ nanoparticles dispersed in an aqueous solution is shown by upon first application of a magnet, under magnet force for about 5 minutes, and under magnetic force for about 1 hour. As seen, the LSG/Fe$_3$O$_4$ nanoparticles in aqueous solution possess excellent magnetic properties and display oriented movement enabling magnetic separation.

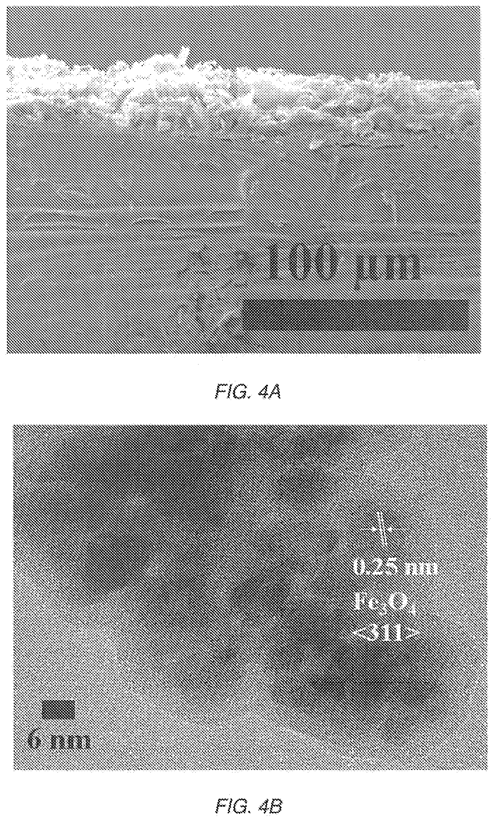

**FIG. 4A** shows a cross-sectional SEM image of an exemplary LSG/Fe$_3$O$_4$ film on a plastic substrate, in accordance with some embodiments. As seen, the thickness of the LSG/Fe$_3$O$_4$ film is about 18.4 $\mu$m.

**FIG. 4B** shows an exemplary high-resolution TEM image of the d-spacing of an exemplary Fe$_3$O$_4$, in accordance with some embodiments. This image shows that the LSG sheets are each wrapped around a 6-10 nm sized Fe$_3$O$_4$ nanoparticle and confirms the <311> planes of Fe$_3$O$_4$ crystals per **FIG. 3C.**

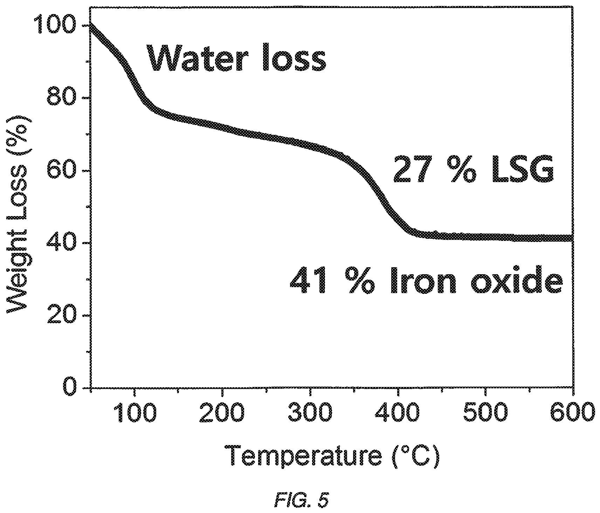

**FIG. 5** shows a TGA of an exemplary LSG/Fe$_3$O$_4$ nanocomposite, in accordance with some embodiments. As seen, the Fe$_3$O$_4$ content of the electrode is about 41 percent by weight.

LSG/Fe$_3$O$_4$ Electrodes and a Symmetric LSG/Fe$_3$O$_4$ Supercapacitor in a 1.0 M Na$_2$SO$_4$ Electrolyte

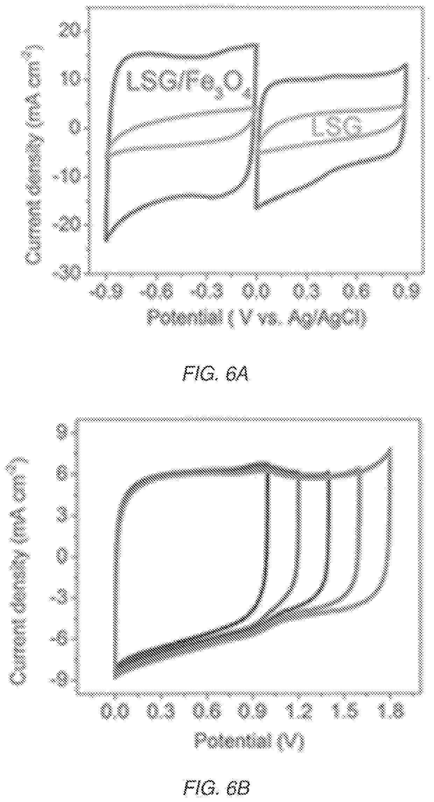

**FIG. 6A** shows cyclic voltammetry (CV) curves of an exemplary three-electrode setup of LSG and LSG/Fe$_3$O$_4$

electrodes at 50 millivolts per second (mV s$^{-1}$), in accordance with some embodiments. **FIG. 6B** shows CV curves of an exemplary three-electrode setup of LSG and LSG/Fe$_3$O$_4$ electrodes at 70 mV s$^{-1}$, in accordance with some embodiments.

Negative and positive voltage window tests of three-electrode cells and two-electrode symmetric supercapacitor pouch cells with a 1.0 M Na$_2$SO$_4$ electrolyte at scan rated of about 50 mV s$^{-1}$ and 70 mV s$^{-1}$ exhibit a rectangular shape. The significant increase in the capacitance therein, compared with that of bare LSG, indicates that iron oxide contributes to the charge storage through reversible redox reactions. Further, the rectangular shape of the CV curves indicates that Fe$_3$O$_4$ stores charge mainly through adsorption pseudo-capacitance as opposed to through an intercalation faradaic reaction. This charge storage may be attributed to the ultrasmall particle size of the Fe$_3$O$_4$ nanoparticles (about 6 nm), which limits redox reactions to the surfaces. During the faradaic processes at the iron oxide nanoparticles, electrons coupled with the highly conductive macro-porous LSG framework enable higher energy densities without reduced power densities. Further, the positive and negative voltage windows of the LSG/Fe$_3$O$_4$ electrode with the 1.0 M Na$_2$SO$_4$ electrolyte reveal ideal CV shapes without a significant increase in the cathodic or anodic current, which signifies that neither H$_2$ on the negative electrode nor O$_2$ on the positive electrode are produced. As such, due to the strong solvation energy of the sodium cations and sulfate anions, the electrolyte decomposition voltage is higher than the thermodynamic value of about 1.23 V. Further, the strong solvation energy of the sodium cations and sulfate anions provides strong bonds in the solvation shell and prevents water decomposition up to about 1.8 V. In this potential range, energy is consumed to break bonds in the solvation shell instead of causing the decomposition of water.

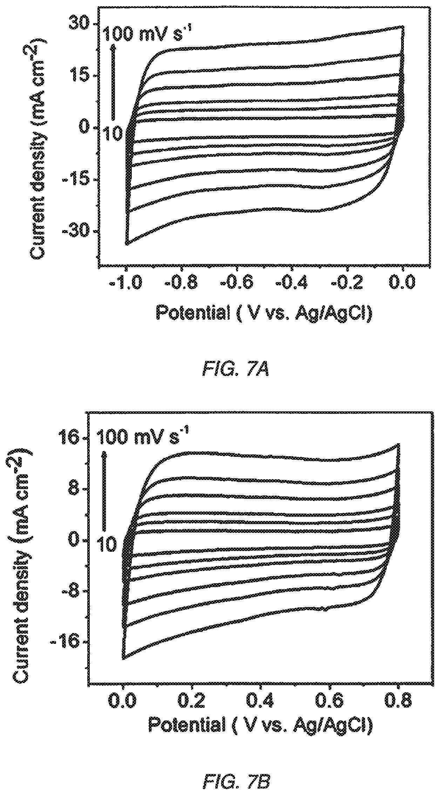

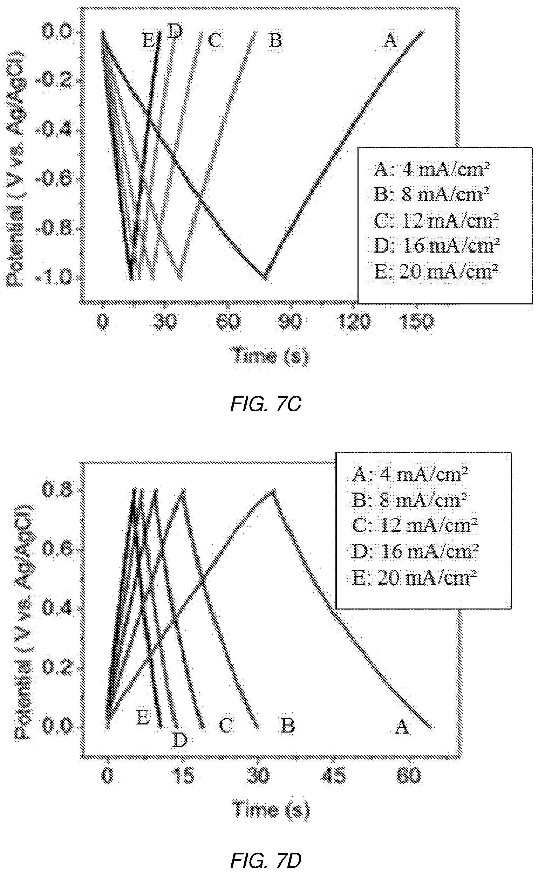

**FIG. 7A** shows CV curves of the negative voltage window (0 V to -1.0 V vs. Ag/AgCl) of an exemplary three LSG/Fe$_3$O$_4$ electrode device in 1.0 M Na$_2$SO$_4$ at different scan rates of 10, 20, 30, 50, 70, and 100 mV s$^{-1}$. **FIG. 7B** shows the same CV curves of the positive voltage window (0 V to 0.8 V vs. Ag/AgCl) of the device of **FIG. 7A** at different scan rates of 10, 20, 30, 50, 70, and 100 mV s$^{-1}$. **FIG. 7C** shows charge-discharge (CC) curves of the negative voltage window (0 V to -1.0 V vs. Ag/AgCl) of an exemplary LSG/Fe$_3$O$_4$ electrode at different current densities. **FIG. 7D** shows the same CC curves of the positive voltage window (0 V to 0.8 V vs. Ag/AgCl) of an exemplary LSG/Fe$_3$O$_4$ electrode at different current densities. As seen, the CVs retain their rectangular shapes with increasing scan rates up to about 100 mV s$^{-1}$, and an ideal triangular shape is observed in the CC curves at different current densities, which indicates the high rate capability of the electrode in both positive (0 V to about 0.8 V vs. Ag/AgCl) and negative (0 V to about -1.0 V vs. Ag/AgCl) voltage windows. The areal specific capacitances of the exemplary LSG/Fe$_3$O$_4$ electrode in the negative and positive voltage windows are about 264 mF cm$^{-2}$ (about 691 F g$^{-1}$) and about 137 mF cm$^{-2}$ (about 357 F g$^{-1}$) at a scan rate of about 20 mV s$^{-1}$, respectively.

In some embodiments, the two electrodes have the same chemical composition (Fe$_3$O$_4$ nanoparticles on 3D porous graphene framework), whereby some components store more charge than others depending on the polarity of the electrode. Specifically, capacitance of the negative electrode may mainly arise from Fe$_3$O$_4$ nanoparticles, whereas graphene may dominate charge storage in the positive electrode. In the negative electrode, the conducting LSG network may act as a 3D current collector, to provide electron "superhighways" for charge storage and delivery, while the nanostructured Fe$_3$O$_4$ enables fast and reversible faradaic reactions with short ionic diffusion pathways. The 3D porous structure of the electrode allows for the full utilization of the capacitive properties of Fe$_3$O$_4$ and exhibits ultrahigh capacitance of the negative electrode.

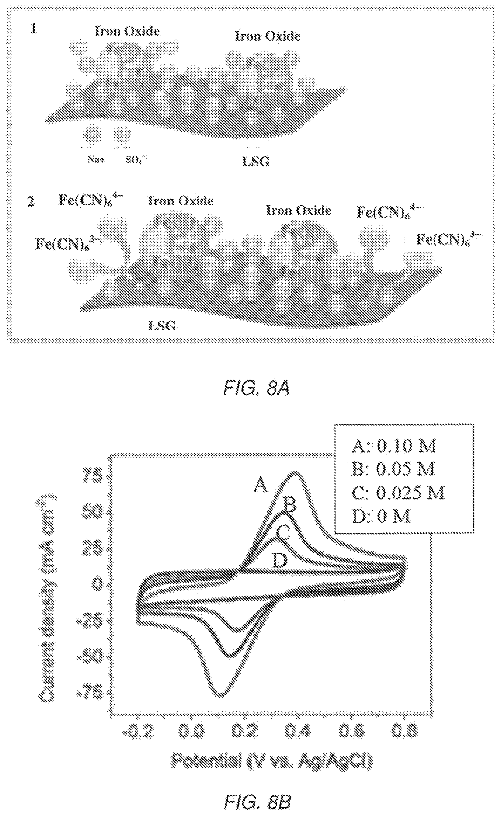

As, per **FIGs. 8A-8I,** the electrical charge of the positive and negative electrodes may be balanced to store equal charge through the use of a redox active electrolyte.

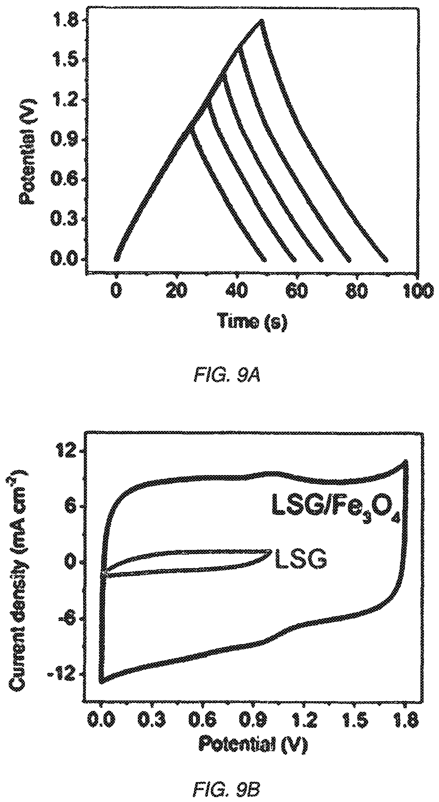

The working voltage of a symmetric three-electrode LSG/Fe$_3$O$_4$ supercapacitor in an aqueous electrolyte comprising about 1.0 M Na$_2$SO$_4$ is expected to be about 1.8 V based on the operating voltage window results. **FIG. 6B** and **FIG. 9A** show CV and CC charts, respectively, of an exemplary symmetric LSG/Fe$_3$O$_4$ supercapacitor with two identical LSG/Fe$_3$O$_4$ electrodes separated by an ion porous separator, at voltage intervals of about 0.2 V from about 0.8 V and to about 1.8 V at a scan rate of about 70 mV s$^{-1}$ for CV curves and a current density of about 4 mA cm$^{-2}$ for CC curves. As seen, the rectangular CV shape at 1.8 V, without any significant increase of anodic current displays the ideal capacitive behavior of the cell, without any decomposition of the aqueous electrolyte with hydrogen or oxygen evolution.

In addition, per **FIG. 9A,** the ideal triangular shape CC curves exhibit very small IR drops and a high capacitance at voltages of up to about 1.8 V, and that as such, the electrolyte is stable and does not decompose. **FIG. 9B** shows a comparison between the performance of an exemplary bare LSG symmetric supercapacitor and an exemplary LSG/Fe$_3$O$_4$ symmetric supercapacitor, at a scan rate of about 100 mV s$^{-1}$, whereby, even at a high operating voltage of about 1.8 V, the specific capacitance of an LSG/Fe$_3$O$_4$ supercapacitor is about 10 times larger than that of the bare LSG. As such, the operational voltage window of 1.8 V can be obtained for the exemplary symmetric LSG/Fe$_3$O$_4$ supercapacitor.

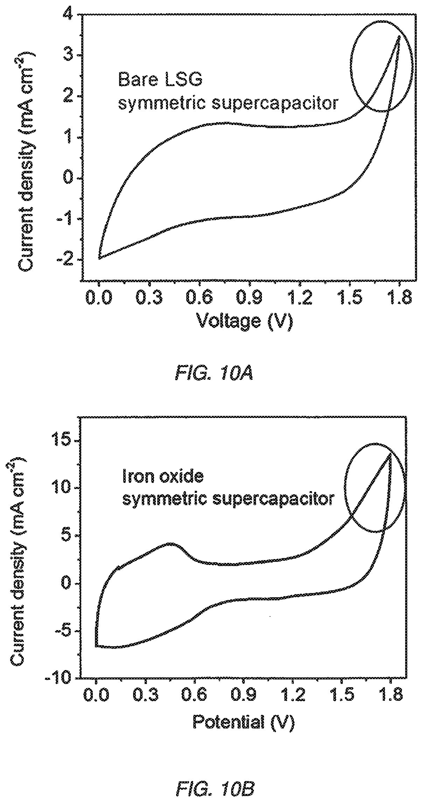

By contrast, CV curves of an exemplary bare LSG symmetric supercapacitor and an exemplary pristine iron oxide symmetric supercapacitor are shown in **FIGs. 10A and 10B** at about 1.8 V with a scan rate of about 100 mV s$^{-1}$, whereby both exemplary supercapacitors obviously suffer from decomposition of the aqueous electrolyte above about 1.2 V. The comparison between the performance of the symmetric three-electrode LSG/Fe$_3$O$_4$ supercapacitor in an aqueous electrolyte comprising about 1.0 M Na$_2$SO$_4$ indicates the remarkable improvement of the extended operational voltage and capacitance that arises from the combination of the special architectural form of the LSG/$Fe_3O_4$ electrode with an about 1.0 M $Na_2SO_4$ electrolyte.

Although the LSG/$Fe_3O_4$ supercapacitor herein may be classified as a symmetric supercapacitor, per the electrode composition and loading mass, its composition may function like an asymmetric device, whereby the majority of the charge stored in the positive and negative electrodes stems from the graphene and $Fe_3O_4$, respectively. As such, the asymmetric charge storage mechanism increases the voltage window of the aqueous supercapacitor to about 1.8 V.

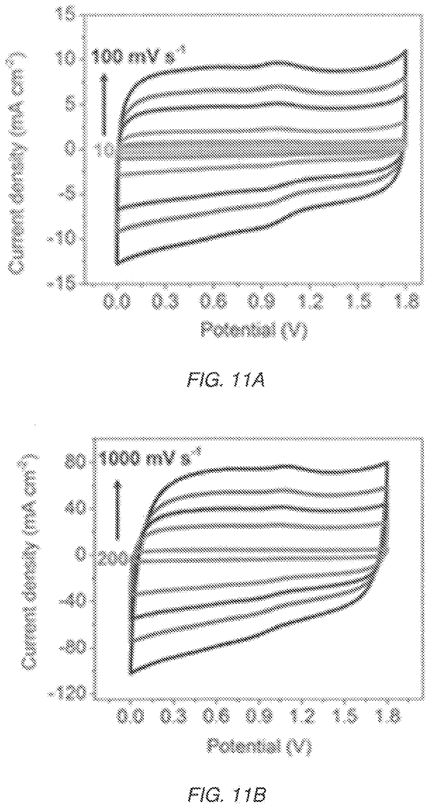

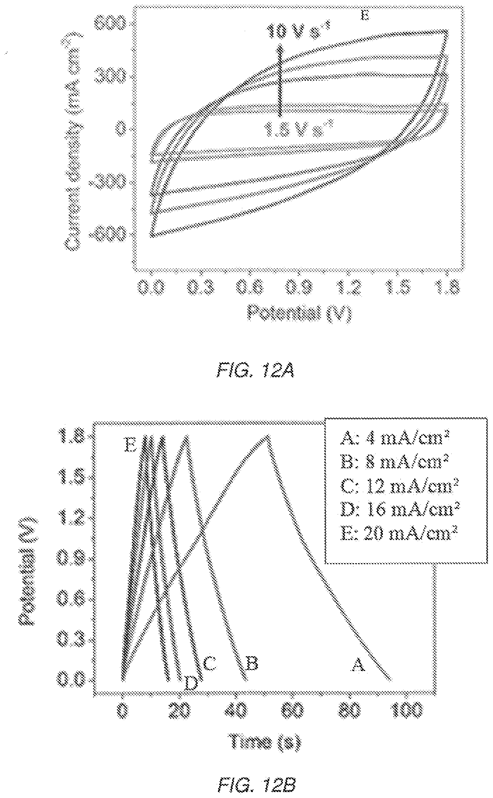

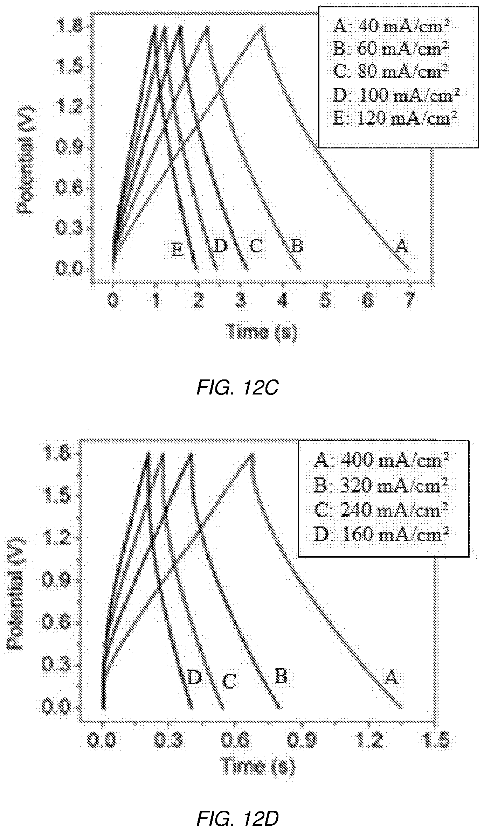

**FIG. 11A** and **FIG. 11B** show the CV shape of the exemplary LSG/$Fe_3O_4$ supercapacitor with a potential window of about 1.8 V under different scan rates from about 10 mV s$^{-1}$ to about 1000 mV s$^{-1}$. The rectangular shape of the CV curves therein is retained at very high scan rates of about 1000 mVs$^{-1}$. **FIG. 12A** further confirms the rectangularity of the CV curves of the exemplary LSG/$Fe_3O_4$ supercapacitor even at about 10,000 mV s$^{-1}$. As such, the exemplary LSG/$Fe_3O_4$ symmetric supercapacitor exhibits ideal capacitance with a high rate capability of about 1.8 V.

**FIGs. 12B-12D** show CC curves of the exemplary LSG/$Fe_3O_4$ supercapacitor under different current densities from about 4 mA cm$^{-2}$ to about 400 mA cm$^{-2}$, whereby the ideal triangular curve shape displays the high performance of the exemplary LSG/$Fe_3O_4$ supercapacitors. The specific capacitance of an exemplary two-electrode LSG/$Fe_3O_4$ supercapacitor was measured at about 460 F g$^{-1}$ (about 176 mF cm$^{-2}$) per electrode through the discharge curve.

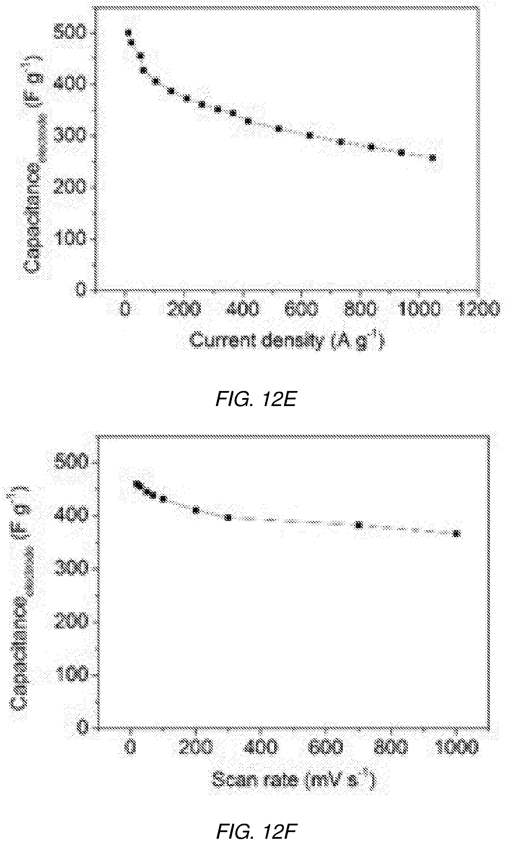

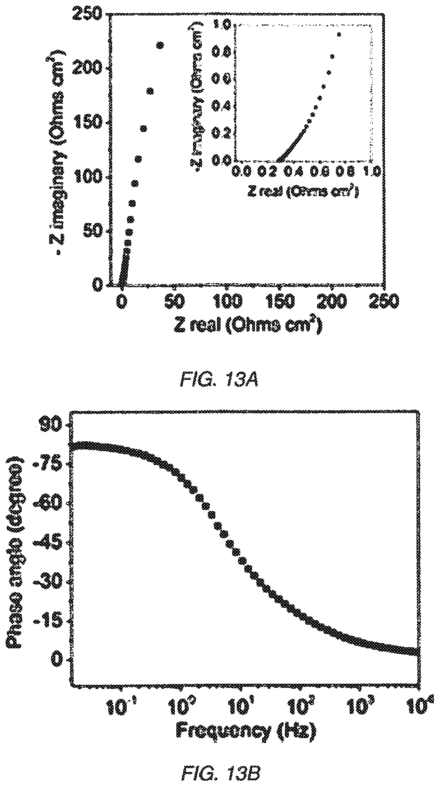

As seen in **FIG. 12E,** the exemplary LSG/$Fe_3O_4$ supercapacitor can deliver about 300 F g$^{-1}$ at an ultrahigh current density of about 1100 A g$^{-1}$. The specific capacitance per electrode, the areal capacitance for the device, and the entire stack capacitance for the supercapacitor (including current collector and separator) under different current densities may be calculated per the data from **FIG. 12E** and **FIG. 12F.** Thus, the exemplary LSG/$Fe_3O_4$ supercapacitor exhibits excellent rate capability through the special 3D architectural form of the LSG/$Fe_3O_4$ which enables fast ionic and electronic diffusion within the electrode. In addition, the highly conductive and porous structure of LSG provides an efficient charge transfer mechanism for iron oxide nanoparticles during redox reactions, as confirmed by the x-intercept of 0.35 $\Omega$ cm$^2$, representing a very low equivalent series resistance, per the Nyquist plot in **FIG. 13A.** Further, the lack of semicircles, and the vertical straight up line at low frequency, per **FIG. 13A,** indicates no charge transfer resistance, fast ionic diffusion to the electrode, and fast electron transfer during the redox reactions.

Further, the Bode plot of the exemplary LSG/$Fe_3O_4$ supercapacitor in **FIG. 13B,** displays a maximum phase angle of about -82° which is close to the about -90° for ideal capacitors, and a frequency response time (inverse of the characteristic frequency $f_0$ = 7 Hz at a phase angle of about -45°) of about 0.14 s shows a much faster response time than many conventional activated carbon electrochemical capacitors. This rapid frequency response may be attributed to the excellent 3D architecture and the interconnected structure of the exemplary LSG/$Fe_3O_4$ electrodes, which enables strong interaction between LSG and the $Fe_3O_4$ nanoparticles, an increased accessibility of ions to the macroporous LSG, and fast charge transfer to the iron oxide during the faradaic reactions.

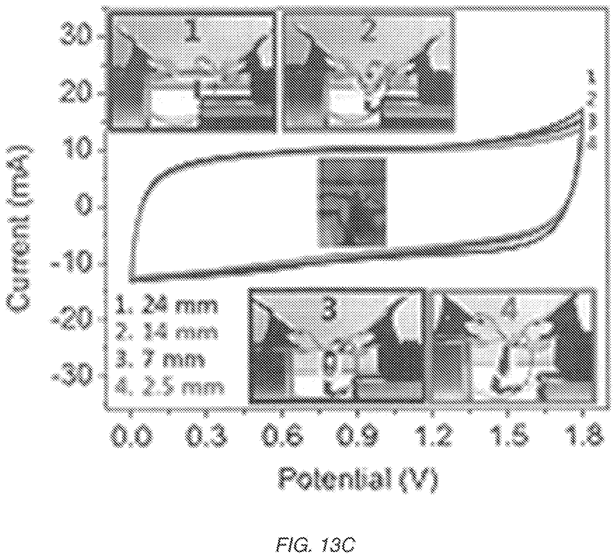

Provided herein is a highly flexible, solid-state supercapacitor comprising two LSG/$Fe_3O_4$ electrodes and a polyvinyl alcohol (PVA)-$Na_2SO_4$ gel electrolyte. **FIG. 13C** displays CV curves at about 100 mV s$^{-1}$ of the exemplary LSG/$Fe_3O_4$-PVA-$Na_2SO_4$ supercapacitor while flat, and under bending radii of about 14 mm, about 7 mm, and about 2.5 mm. As seen, only negligible differences exist between the CV curves of the flat and highly bent (2.5 mm bend radii) of the exemplary LSG/$Fe_3O_4$-PVA-$Na_2SO_4$ supercapacitor. As such, since the large porous space within the 3D interconnected LSG framework, accommodates the deformation of the electrode, the mechanical bending has little to no influence on the ionic and electronic diffusion between the gel electrolyte and the LSG/$Fe_3O_4$ electrode.

**FIG. 13C** insets show an exemplary bent flexible supercapacitor turning on a light-emitting diode, indicating excellent capacitive performance even under harsh mechanical stress.

Electrode Electrochemical Properties

Although pseudo-capacitor research is commonly focused on improving reversible redox reactions through electrode materials such as metal oxides or conducting polymers, such a reliance on solid electrode materials may limit pseudo-capacitance improvements. As such, capacitance may be improved through utilization of a redox-active electrolyte (RE) with LSG/$Fe_3O_4$ and ferricyanide/ferrocyanide RE electrodes.

Provided herein is an asymmetric capacitor mechanism, wherein the positive and negative electrodes are formed of the same chemical composition and loading mass, and wherein the charge is balanced with a redox electrolyte to effectively utilize pseudo-capacitance from a solid electrode and the faradaic reaction from a liquid electrolyte. As such, capacitance in the negative electrode originates from the active materials on the electrode (LSG/$Fe_3O_4$), whereby the solid positive electrode contributes to charge storage and whereby the electrolyte provides capacitance through redox.

From the solid LSG/$Fe_3O_4$ electrode, iron oxide particles exhibit pseudo-capacitive properties through reversible charge-transfer processes, according to the following equation:

$$Fe^{Z+} \leftrightharpoons Fe^{(Z+N)+} + Ne^-; 0 \leq Z \leq 2, 1 \leq N \leq 3 \qquad \text{EQ. 1}$$

The oxidation and reduction peaks appear at 0.4 V and 0.28 V, respectively (see

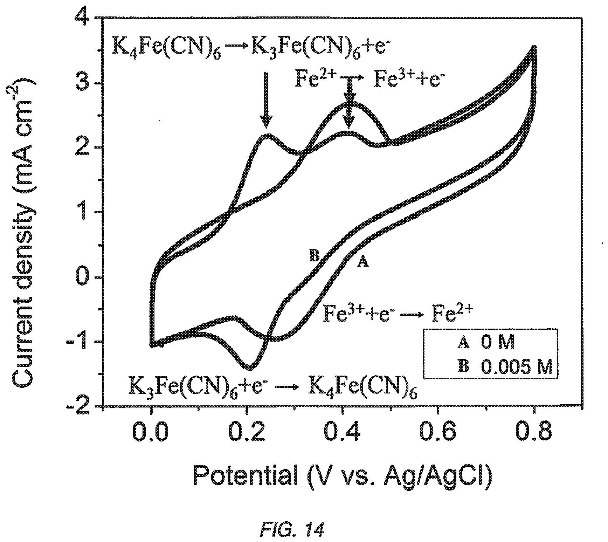

**FIG. 14** curve A). The charging process entails an oxidation process from $Fe^{2+}$ to $Fe^{3+}$, while the discharging process comprises a reduction process from $Fe^{3+}$ to $Fe^{2+}$.

From the RE side, the oxidation and reduction are attributed to the faradaic reaction shown in the following equation:

$$Fe(CN)_6^{4-} \leftrightharpoons Fe(CN)_6^{3-} + e^-$$ EQ. 2

The capacitance of each electrode (measured in a three-electrode device) was calculated from CC curves at different current densities using the following formula:

$$\text{Specific C}_{\text{electrode}} (\text{F g}^{-1}) = \frac{2*\text{Current(A)}*\int U(\text{Volt})dt(\text{sec})}{U^2*Mass(g)}$$ EQ. 3

Mass refers to the mass of $LSG/Fe_3O_4$ active materials, while time and U voltage were obtained from the discharge curve.

The specific capacitance, energy density, and power density of the full device were also were calculated based on both CV profiles and galvanostatic CC curves.

For the CV technique, the capacitance was calculated by integrating the discharge current vs. potential plots using the following equation:

$$\text{Specific C}_{\text{device}} (\text{F g}^{-1}) = \frac{\int idV(A)(V)}{v\left(\frac{V}{s}\right)U(V)*Mass(g)},$$ EQ. 4

where i is current (A), *V* is potential, v is the scan rate (V/s), and *U* is the operating potential window. Mass refers the mass of active materials (two electrodes of $LSG/Fe_3O_4$ and 0.025 M redox additive).

$$\text{Specific C}_{\text{device}} (\text{F cm}^{-3}) = \frac{\int idV(A)(V)}{v\left(\frac{V}{s}\right)U(V)*Volume(cm^3)}$$ EQ. 5

Volume is calculated based on the whole device (current collector, active materials, electrolyte, and separator) with no packaging.

The specific capacitance of the electrode was calculated from the full cell.

$$\text{Specific C}_{\text{electrode}} (\text{F g}^{-1}) = 4*\text{C}_{\text{device}} (\text{F g}^{-1})$$ EQ. 6

The specific energy density of the device was calculated through discharge curve from CC:

$$\text{Specific E}_{\text{device}} (\text{Wh kg}^{-1}) = \frac{I(A)\int U(t)dt(\text{Volt})(hr)}{Mass(kg)}$$ EQ. 7

$$\text{Specific Capacity} (\text{mAh g}^{-1}) = \frac{\text{E device} (\text{Wh } kg^{-1})}{Voltage\ (V)} * \frac{1000\ (mA)}{(A)} * \frac{(kg)}{1000(g)}$$ EQ. 8

$$\text{Specific E}_{\text{device}} (\text{Wh cm}^{-3}) = \frac{I(A)\int U(t)dt(\text{Volt})(hr)}{volume(cm^3)}$$ EQ. 9

The specific power density of device was calculated as follows:

$$\text{Specific P}_{\text{device}}(\text{W kg}^{-1}) = \frac{Energy\ density(Wh/kg)}{Time(\text{hr})} \qquad \text{EQ. 10}$$

$$\text{Specific P}_{\text{device}}(\text{W cm}^{-3}) = \frac{Energy\ density(Wh/cm^3)}{Time(\text{hr})} \qquad \text{EQ. 11}$$

Electrochemical Performance of $LSG/Fe_3O_4$ Electrodes and a Symmetric Supercapacitor in an $[Fe(CN)_6{}^{3-}/Fe(CN)_6{}^{4-}]$ Redox-Active Electrolyte

**FIG. 14** shows the CV curves at potential range from 0 to about 0.8 V at about 5 mV s$^{-1}$ of an exemplary three-$LSG/Fe_3O_4$ electrode device at 5 mV s$^{-1}$ containing a high percentage of $Fe_3O_4$ (about 82%) with, and without a 0.005 M RE $[Fe(CN)_6{}^{3-}/Fe(CN)_6{}^{4-}]$ and 1.0 M $Na_2SO_4$ electrolyte. As seen, the redox pair of the $[Fe(CN)_6{}^{3-}/Fe(CN)_6{}^{4-}]$ electrolyte contributes to the capacitance and stabilizes the cycle life at about 1.8 V.

In **FIG. 14,** the 0 M CV shows two independent oxidation peaks at about 0.22 V and about 0.4 V. The 0.4 V broad oxidation peak is superimposed with a 0.005 M oxidation peak, indicating that this oxidation peak is from the exemplary $LSG/Fe_3O_4$ electrode and the 0.22 V peak is from the RE.

As seen, the redox reaction of the exemplary $LSG/Fe_3O_4$ electrode and the RE occur independently and simultaneously, with the mechanism depicted in **FIG. 8A,** whereas both electrode and electrolyte materials are oxidized during charging, and both the electrode and the electrolyte were reduced simultaneously during discharge.

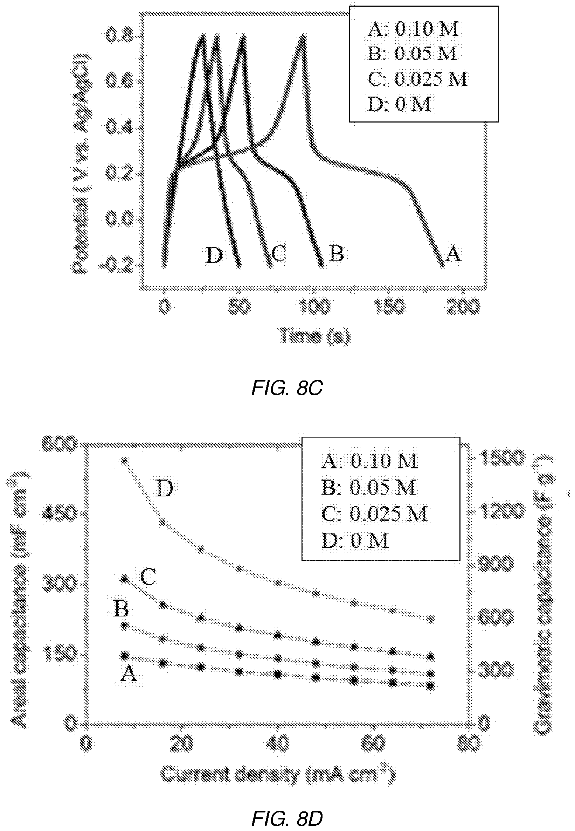

**FIGs. 8B and 8C** show CV curves of an exemplary $LSG/Fe_3O_4$ a three-electrode supercapacitor with various concentrations of $[Fe(CN)_6{}^{3-}/Fe(CN)_6{}^{4-}]$ in the 1.0 M $Na_2SO_4$ electrolyte, at a scan rate of 50 mV s$^{-1}$ and at a current density of 8 mA cm$^{-2}$. A very sharp reversible redox peak is seen in **FIG. 8B,** indicating that the $[Fe(CN)_6{}^{3-}/Fe(CN)_6{}^{4-}]$ ions are highly electrochemically active. Moreover, **FIG. 8B** shows the CV curves with various concentrations of RE ions of 0 M, about in 1.0 M $Na_2SO_4$. As the RE ion concentration increases, from about 0.025 M to about 0.100 M, the characteristic redox peak increases and the capacitance contributed by the RE ions increases, whereby more RE ions contribute to the faradaic-capacitance and shuttle electrons to the electrode, promoting the high activity of the $LSG/Fe_3O_4$ electrode.

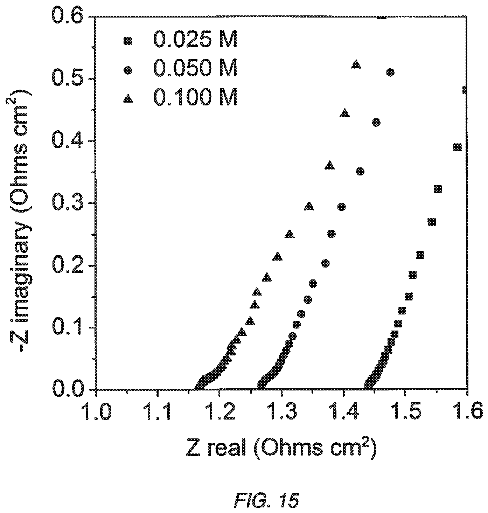

**FIG. 8C** shows the CC curves of the exemplary $LSG/Fe_3O_4$ electrode with varying concentrations of redox ions in the electrolyte at a current density of about 8 mA cm$^{-2}$. **FIG. 8D** shows the specific capacitances of the exemplary electrode at various current densities, based the discharge times in the CC curves of **FIG. 8C.** The exemplary $LSG/Fe_3O_4$ electrode and the 0.1 M RE device exhibits an ultrahigh specific capacitance of about 1489 F g$^{-1}$ (about 570 mF cm$^{-2}$) at about 8 mA cm$^{-2}$, which is about four times larger than the capacitance of the pristine 1.0 M $Na_2SO_4$ electrolyte. This remarkable amount of capacitance may arise from the faradaic processes at the solid iron oxide nanoparticles coupled with the RE and promoting the electron transfer between the exemplary $LSG/Fe_3O_4$ electrodes. The Nyquist plot, as shown in **FIG. 15,** further confirms the high conductivity of the exemplary $LSG/Fe_3O_4$ electrode and $[Fe(CN)_6{}^{3-}/Fe(CN)_6{}^{4-}]$ redox-active electrolyte, whereby, as the redox-ion concentration is increased, the intercept of the Nyquist plot values decreases, and a low charge transfer resistance at the electrode-electrolyte interface is observed.

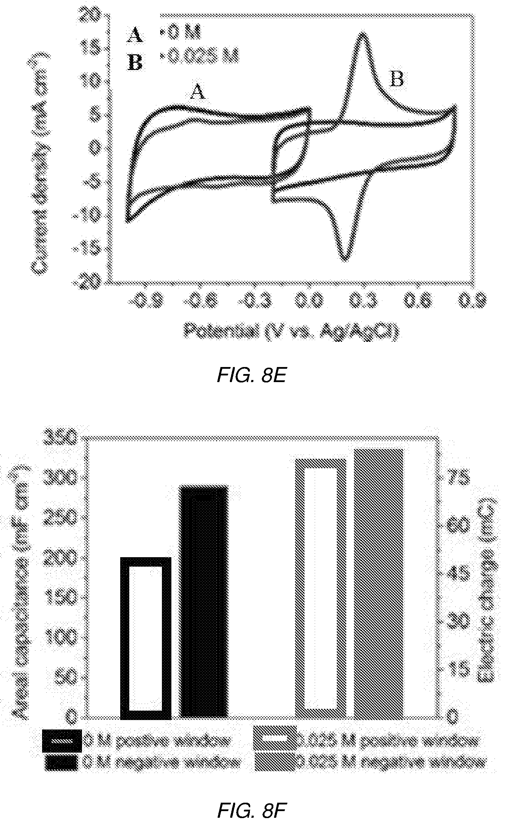

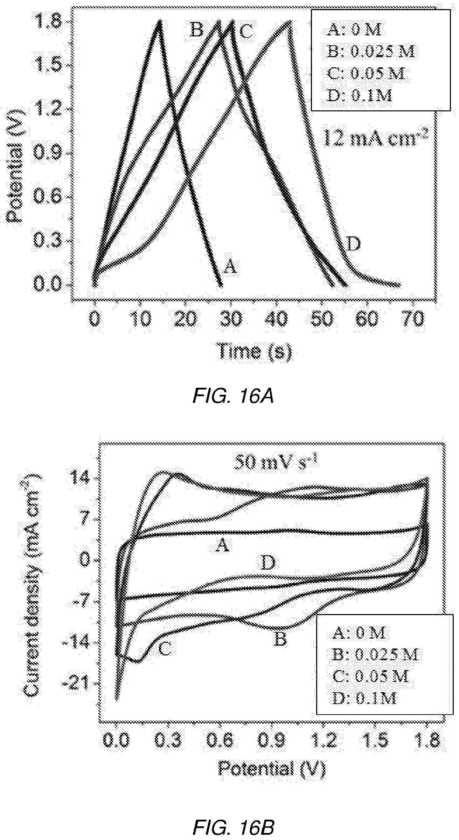

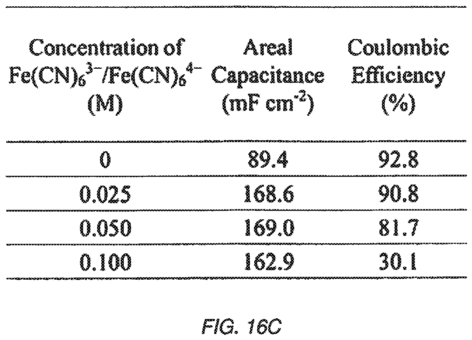

Although two and three-electrode devices are expected to be stable in the same RE with the separator, the two-electrode device exhibits very different performance with a higher concentration of RE, as, for a full supercapacitor, the balance of the electric charge between positive and negative electrodes is critical to obtain a satisfactory capacitive performance and should follow the relationship $Q_+ = Q-$. **FIG. 8E** shows CV curves at about 20 mV s$^{-1}$ without RE and with 0.025 M RE in both positive and negative windows (about 0 to about -1 V and about -0.2 to about 0.8 V) of an exemplary symmetric three-electrode supercapacitor comprising $LSG/Fe_3O_4$ electrodes. As seen, per the electric charge values for both negative and positive voltage windows in different concentrations of RE, the optimal RE concentration, per **FIG. 8F,** is about 0.025 M for the symmetric $LSG/Fe_3O_4$ supercapacitor. Thus increasing RE ion concentration may have a negligible effect on the negative electrode, while only increasing the capacitance of the positive electrode of the exemplary device. Therefore, the increase in the concentration of RE in the electrolyte may not be correlated to an increase in capacitance in the two-electrode device because under a high concentration, the positive and negative charges are not balanced, and a portion of the positive charges is used for the decomposition of the electrolyte instead of charge storage between the negative and positive electrodes, per **FIG. 16A.** Thus, the exemplary two-electrode device may exhibit a low coulombic efficiency at high concentrations of RE. However, an electrolyte concentration of about 0.025 M in the two-electrode device increases the capacitance without any decomposition of the electrolyte. **FIG. 16B** shows CV curves at 50 mV s$^{-1}$, and **FIG. 16C** shows the areal capacitance and coulombic efficiency at different concentrations of RE, for the exemplary two-electrode device, as listed.

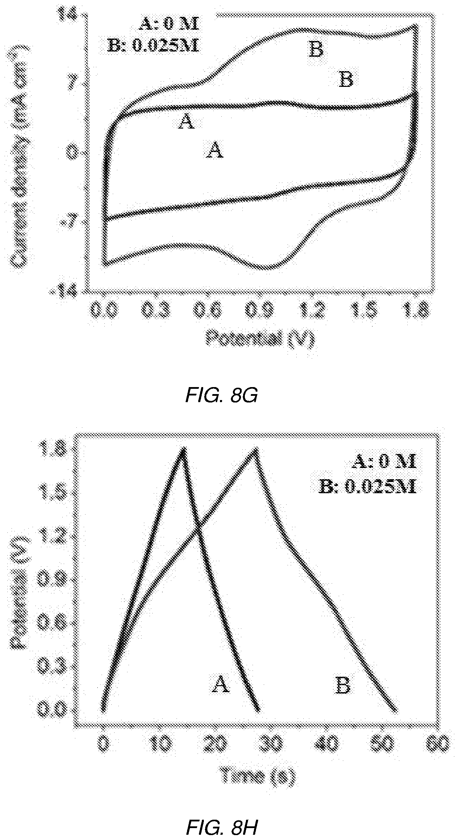

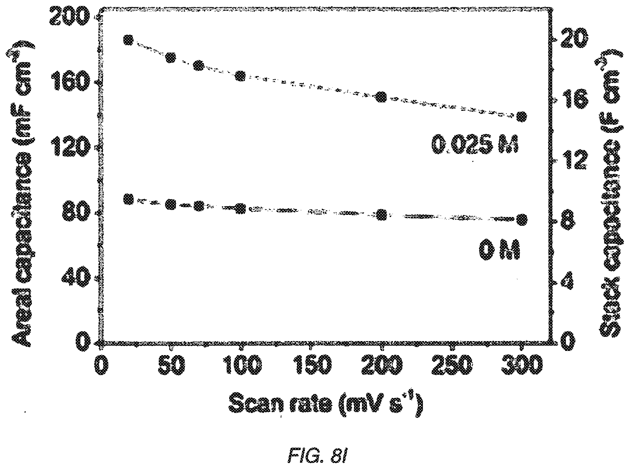

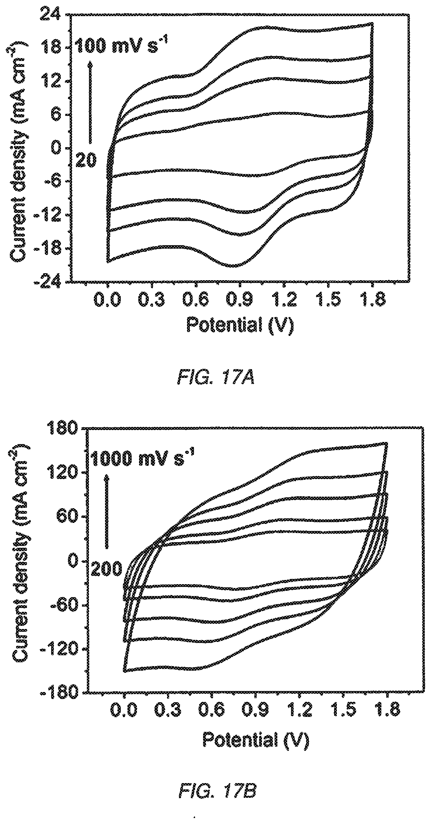

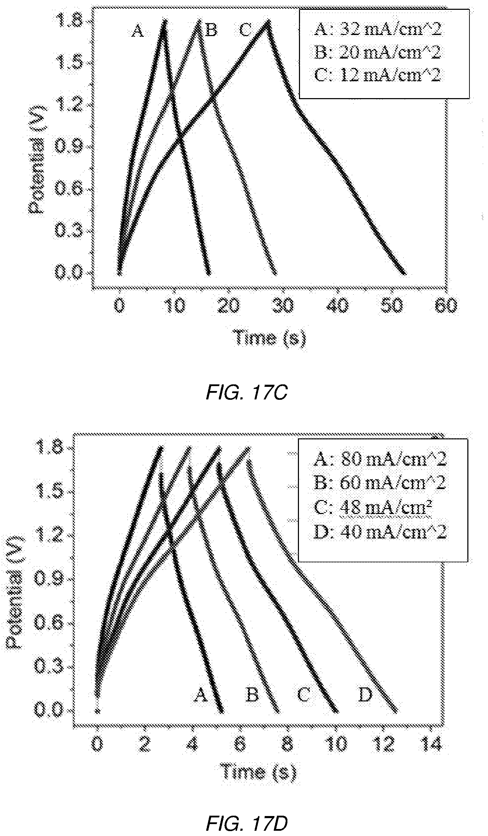

**FIG. 8G** and **FIG. 8H** show ideal behavior of the exemplary device, per the CV and CC curves of exemplary two-electrode cells before and after the addition of about 0.025 M RE. In **FIG. 8G,** the CV curve with the RE shows that the area under the curve increases by a factor of two compared with the normal electrolyte and also shows characteristic redox peaks (at about 1.1 V and about 0.9 V) of the RE. The shape of the CC curves, per **FIG. 8H,** also follows the about 1.1 V and about 0.9 V redox peaks that appear in the CV curves, associated with a doubling of the discharge time compared with the normal electrolyte. As shown in **FIGs. 17A-17D,** the exemplary device exhibits a very distinct redox peak, even under a high scan rate (e.g., about 1000 mV s$^{-1}$) and high current density (e.g., about 80 mA cm$^{-2}$). These results imply that the RE electrolyte experiences incredibly fast electron transfer due to the unique properties of the LSG/Fe$_3$O$_4$ electrodes. **FIG. 8I** shows the areal capacitance and stack capacitance plotted as a function of the applied current density. The stack capacitance was calculated based on the volume of the current collector, the active materials, electrolyte, and separator. Per **FIG. 8I**, the maximum stack capacitance of the 0.025 M RE reached about 25.6 F cm$^{-3}$ (about 716 F g$^{-1}$ electrode) at a scan rate of 20 mV s$^{-1}$ and still retained 19.2 F cm$^{-3}$ (535 F g$^{-1}$ electrode) at a high scan rate of 300 mV s$^{-1}$. Further, the stack capacitance of the exemplary device with the 0.025 M RE is about double that of a bare 1.0 M Na$_2$SO$_4$ electrolyte. This excellent capacitive behavior may be attributed to the hybrid LSG/Fe$_3$O$_4$ electrodes in which both the solid electrode and the RE work synergistically to store charge more effectively.

Discharge and Leakage Measurements

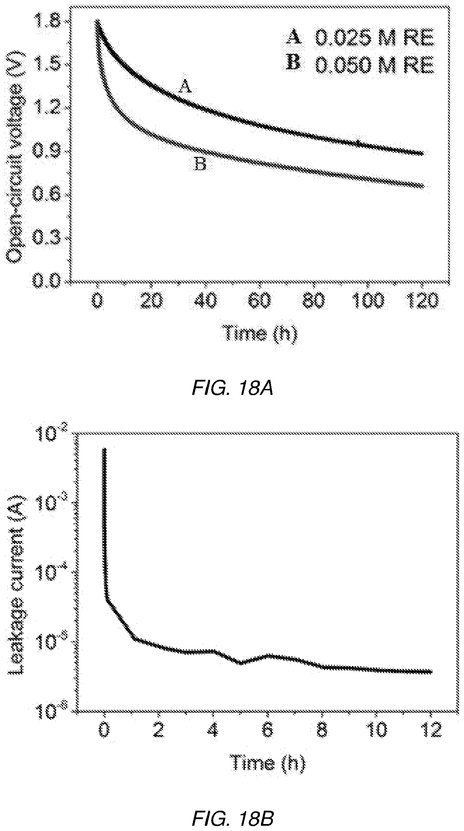

One of the main design considerations for supercapacitors is the rate of self-discharge or how fast the cell loses charge under open circuit conditions. The self-discharge curves obtained after charging up the exemplary device with two different concentrations of redox electrolyte to about 1.8 V for 2 hours is shown in **FIGs. 18A and 18B** and indicate that the higher the concentration of the redox electrolyte, the faster the self-discharge rate. Specifically, the exemplary devices with 0.025 M RE self-discharges to 1/2 Vmax (about 0.9 V) in about 120 hours, whereas 0.05 M of RE self-discharges to about 0.9 V in about 40 hours, which is superior to a commercial capacitor that self-discharges to half of a maximum charged voltage in 2 hours (i.e., $t_{1/2}V_{max}$ = 2 hours). In other words, the value of leakage current for exemplary devices of this disclosure is about 0.00368 mA, which is required to maintain the about 1.8 V after holding voltage for about 12 hours. This superior self-discharge performance shows the promise of the LSG/Fe$_3$O$_4$ supercapacitors described herein.

Direct Fabrication of LSG/Fe$_3$O$_4$ Interdigitated Micro-Supercapacitors

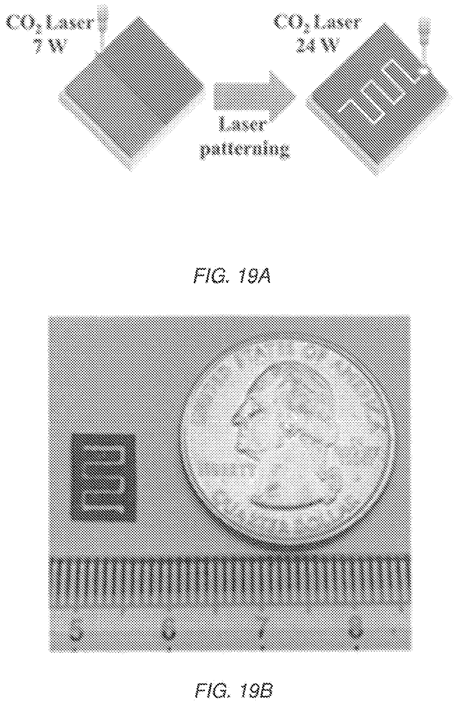

Recent trends in miniaturized portable electronic devices have raised the demand for miniaturized energy storage devices that can be easily integrated into an electronic circuit. Unlike previous techniques that require multiple complex steps, the laser technique described here, per **FIG. 19A,** may be used for the direct patterning of a micro-supercapacitor to any shape and size within minutes.

An exemplary LSG/Fe$_3$O$_4$ electrode film is fabricated under a 7 W CO$_2$ laser, whereby, once the starting material (FeCl$_3$ + GO) has changed to the LSG/Fe$_3$O$_4$ electrode, a 24 W CO$_2$ laser is used to form the interdigitated finger patterned electrodes. Under the high-power laser, all the active materials and current collector are etched away and work as separators. **FIG. 19B** shows a micro-supercapacitor with three positive micro-electrodes and three negative micro-electrodes. As seen, the pattern is well defined without any overlap or short circuits between the positive and negative micro-electrodes. This laser technique allows for the fabrication of micro-supercapacitors in one simple step to enable the fabrication of several cells connected together in series and in parallel for energy modules. The micro-supercapacitor modules produced by the methods herein may be prepared in a facile way and are suitable for on-chip integration into electronic circuits without any further processing.

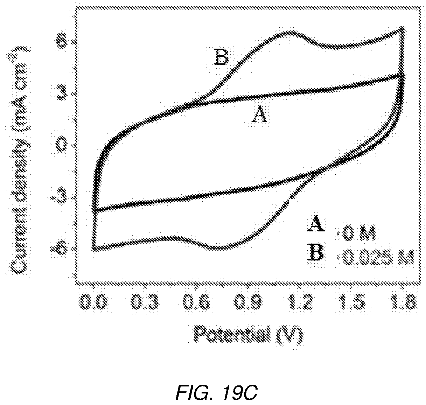

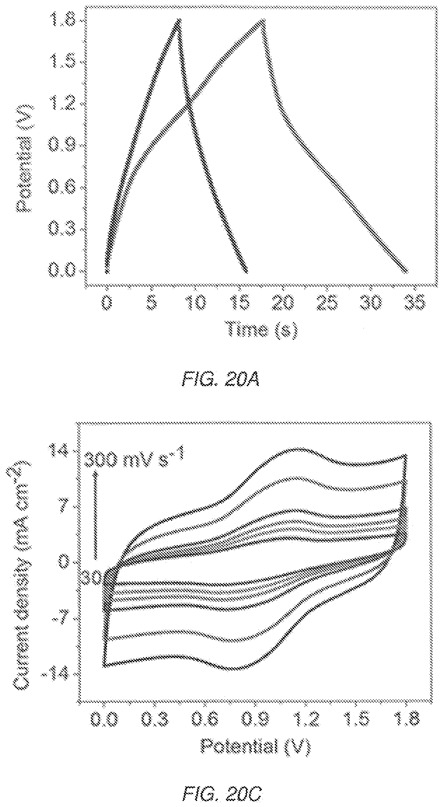

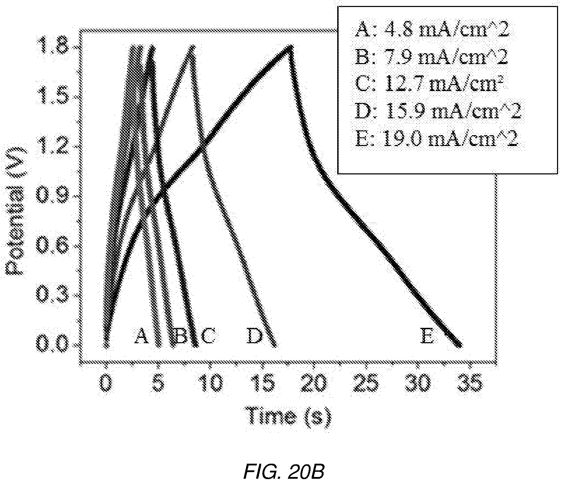

The exemplary micro-supercapacitor with a 1.0 M Na$_2$SO$_4$ electrolyte display an ideal CV rectangular shape, per **FIG. 19C,** even when operated at about 1.8 V under about 100 mV s$^{-1}$. The distinct redox peaks are observed upon adding about 0.025 M of RE and therein are also noticeable in the CC curves of the exemplary device, per **FIG. 20A.** Further, the exemplary device, per the CC curves in **FIG. 20A** and **20B** and the CV curves in **FIG. 20C,** exhibits a 2.1 times increased capacitance with the use of the RE 0.025 M RE, fast and reversible charge and discharge properties, and variable current densities.

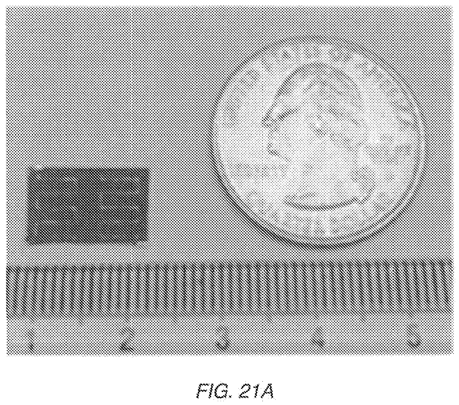

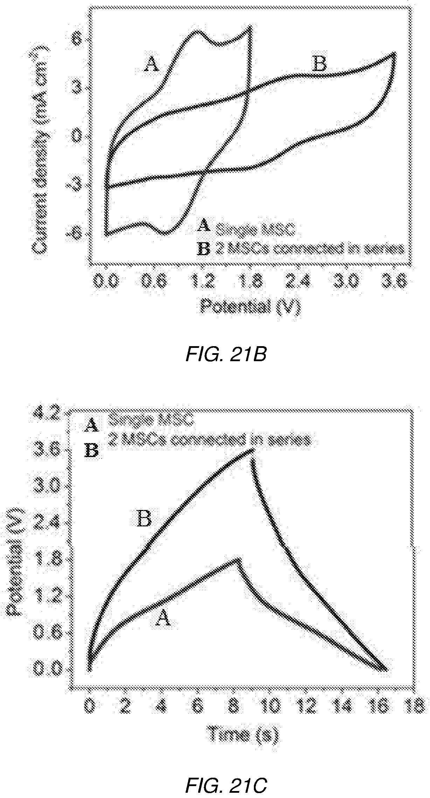

**FIG. 21A** shows a photograph of an exemplary tandem model with two cells connected in series the electrochemical performance of which is shown in **FIG. 21B** and

**FIG. 21C.** The voltage of the module is about 3.6 V, compared with about 1.8 V for a single cell. As seen in **FIG. 21C,** the CC curve for the exemplary tandem device displays a very low voltage drop as well, indicating an excellent performance with low internal resistance when connecting these micro-supercapacitors in series. This confirms the feasibility of the micro-supercapacitor modules for real applications.

Performance Comparison of LSG/Fe$_3$O$_4$ Based Supercapacitors with LSG/Fe$_3$O$_4$ Based Micro-Supercapacitors

Table 2 below shows a summary of the specific capacitance, energy density, and power density of an exemplary

symmetric LSG/$Fe_3O_4$ supercapacitor with 1.0 M $Na_2SO_4$, LSG/$Fe_3O_4$ supercapacitor with about 0.025 M $[Fe(CN)_6^{3-}/Fe(CN)_6^{4-}]$ in about 1.0 M $Na_2SO_4$ and an LSG/$Fe_3O_4$ micro-supercapacitor with 0.025 M $[Fe(CN)_6^{3-}/Fe(CN)_6^{4-}]$ in about 1.0 M $Na_2SO_4$, normalized by the two electrode active materials (LSG/$Fe_3O_4$) and about 0.025 M RE. The volume is calculated based on the whole device (current collector, active materials, electrolyte, and separator) with no packaging.

Table 2

| Device | Capacitance (20 mV s$^{-1}$) | | | Energy density (20 mV s$^{-1}$) | | Power density (300 mV s$^{-1}$) | |
|---|---|---|---|---|---|---|---|
| | F g$^{-1}$ | mF cm$^{-2}$ | F cm$^{-3}$ | Wh kg$^{-1}$ | Wh cm$^{-3}$ | kW kg$^{-1}$ | W cm$^{-3}$ |
| LSG/$Fe_3O_4$ | 114 | 87.2 | 12.0 | 72.5 | 0.00765 | 39.6 | 4.18 |
| Redox-electrolyte LSG/$Fe_3O_4$ | 178.9 | 186.1 | 25.6 | 121.5 | 0.0174 | 55.9 | 8.03 |
| Redox-electrolyte LSG/$Fe_3O_4$ Micro-supercap | 151.9 | 62.7 | 26.3 | 37.3 | 0.0164 | 11.1 | 4.83 |

Performance of LSG/$Fe_3O_4$ Based Supercapacitors Compared with Reported Supercapacitors

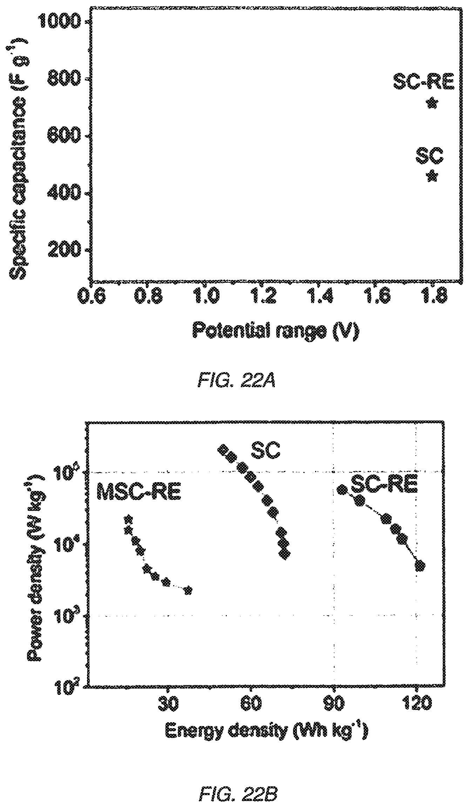

Per **FIG. 22A,** the exemplary LSG/$Fe_3O_4$ symmetric supercapacitor provided herein is the only currently available iron oxide supercapacitor that works at about 1.8 V in an aqueous electrolyte. The exemplary LSG/$Fe_3O_4$ supercapacitor-redox electrolyte (SC-RE) device is capable of delivering a specific capacitance of up to about 716 F g$^{-1}$, which is approximately 1.5 times higher than that of the traditional 1.0 M $Na_2SO_4$ electrolyte LSG/$Fe_3O_4$ supercapacitor cell device. As such, LSG/$Fe_3O_4$ electrode with a redox active electrolyte herein provides dramatically improved operational voltage and capacitance.

A Ragone plot describing the relationship between the energy density and power density, based on the total mass of the active materials in each device of the exemplary LSG/$Fe_3O_4$ electrochemical capacitors, is presented in **FIG. 22B.** As seen, the exemplary SC-RE device is capable of delivering energy densities up to about 121 Wh kg$^{-1}$. Further, even at a very high power density of about 55.9 kW kg$^{-1}$, the SC-RE exhibits an energy density of about 93.2 Wh kg$^{-1}$. The maximum power density of this supercapacitor is about 201 kW kg$^{-1}$, which is two-orders of magnitude higher than previously published iron oxide hybrid supercapacitors. The mass of the ferrocyanide redox mediator was included in all calculations.

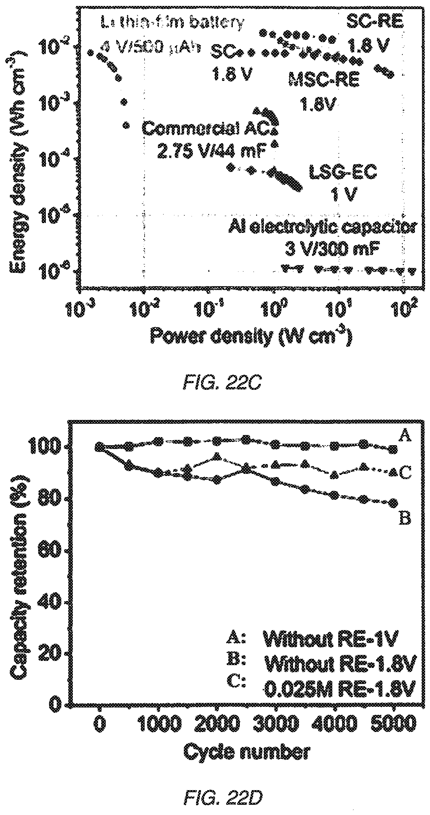

**FIG. 22C** shows a Ragone plot based on the volume of the full device that includes the active material, current collector, separator, and electrolyte and that compares the LSG/$Fe_3O_4$ supercapacitors with a commercially available lithium thin film battery, a carbon-based supercapacitor, an aluminum electrolytic capacitor, traditional sandwich-type supercapacitors, and interdigitated micro-supercapacitors. The energy density of the exemplary SC-RE herein is about 17.4 mWh cm$^{-3}$, which is about 15 times higher than any commercially available activated carbon electrochemical capacitor and about 1.5 times higher than a lithium thin film battery. Furthermore, the exemplary SC-RE herein is configured to provide power densities up to about 63 W cm$^{-3}$, which is 10,000 times faster than a lithium thin-film battery. Therefore, LSG/$Fe_3O_4$ devices in combination with a redox electrolyte could be excellent candidates for future energy storage devices.

A long cycle life is another important characteristic for practical energy storage devices. The combination of a redox-electrolyte and LSG/$Fe_3O_4$ not only increases the capacitance but also stabilizes the device cycle life at a high operating voltage. **FIG. 22D** shows the cycle performance of an exemplary symmetric LSG/$Fe_3O_4$ supercapacitor with and without redox electrolyte that is charged and discharged at a current density of about 12 mA cm$^{-2}$ for about 5,000 cycles. The exemplary symmetric LSG/$Fe_3O_4$ supercapacitor can operate at about 1.8 V in aqueous 1.0 M $Na_2SO_4$ electrolyte but exhibits a greater cycle life at about 1 V due to electrolyte decomposition forming gas ($H_2$ or $O_2$), which detaches the active material from the current collector. The addition of about 0.025 M of the RE into about 1.0 M $Na_2SO_4$ improves the cycle life to about 90% capacity retention for about 5,000 cycles. In SC-RE device, the ferrocyanide redox mediator may play a major role during charge and discharge.

Without the redox mediator, the positive and negative electrodes may not be charge balanced, meaning that the negative electrode may experience more degradation in cycling stability than the positive electrode, resulting in a supercapacitor with low cycling stability. However, after the redox mediator is added into the electrolyte, the positive and negative electrodes are balanced and a better cycle life is expected.

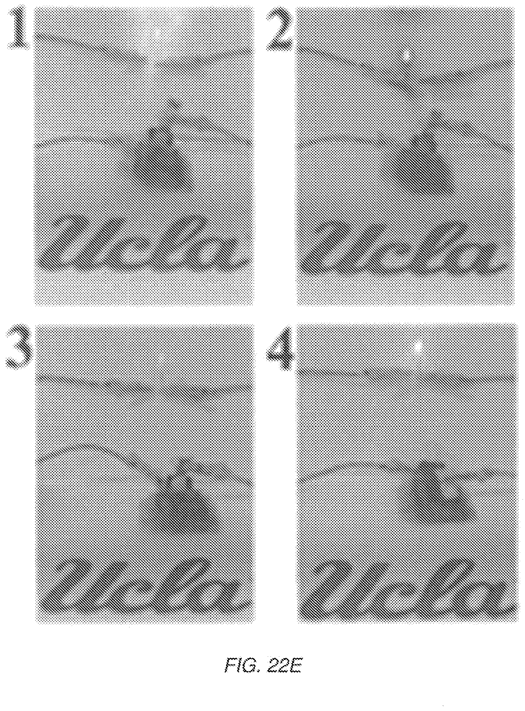

Supercapacitors are often packed in series to build up modules with operating voltages sufficient for the application. **FIG. 22E** shows that an exemplary two LSG/$Fe_3O_4$ electrode supercapacitor in series, when charged for about 3 minutes at about 3.6 V, can brightly light up several LEDs of different colors for about 1 hour: green, 5 mm, 2.6 V, 20 mA; blue, 5 mm, 3.4 V, 20 mA; red, 5 mm, 1.9 V, 20 mA; and white, 5 mm, 3.6 V, 20 mA. These results demonstrate the potential of the LSG/Fe$_3$O$_4$ supercapacitors for practical applications.

Effective Thickness of Supercapacitors and Micro-Supercapacitors

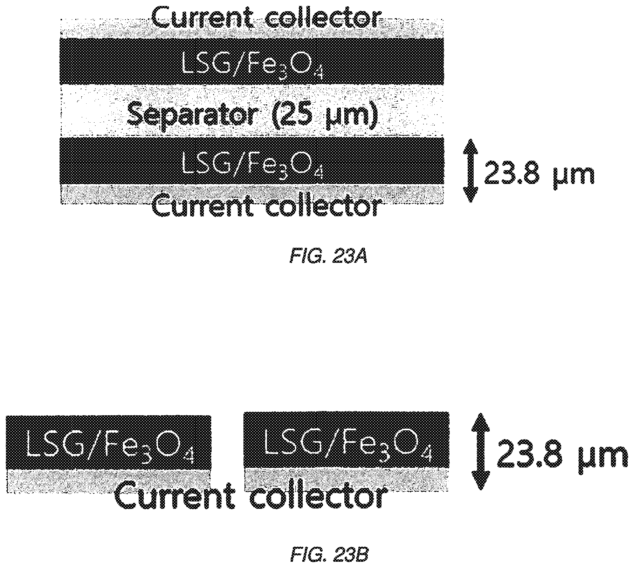

**FIGs. 23A** and **23B** provide schematic illustrations of the cross-section of an exemplary LSG/Fe$_3$O$_4$ sandwich-type supercapacitors and interdigitated micro-supercapacitors. As seen, the effective thickness of the sandwich-type device is about 72.6 $\mu$m compared with only about 23.8 $\mu$m for the planar device.

While preferred embodiments of the present disclosure have been shown and described herein, it will be obvious to those skilled in the art that such embodiments are provided by way of example only. Numerous variations, changes, and substitutions will now occur to those skilled in the art without departing from the disclosure. It should be understood that various alternatives to the embodiments of the disclosures described herein may be employed in practicing the disclosure. It is intended that the following claims define the scope of the disclosure and that methods and structures within the scope of these claims and their equivalents be covered thereby.

**EXAMPLES**

Example 1: Synthesis of LSG/Fe$_3$O$_4$ Electrodes

In an exemplary method of synthesis/fabrication, GO was synthesized from graphite flakes using a modified Hummers' method. About 100 mg of FeCl$_3$·6H$_2$O in a powder form was slowly added to about 20 mL of a GO dispersion in water (about 2 mg ml$^{-1}$) under continuous stirring followed by sonication for about 30 minutes. The homogeneous solution was drop-cast onto a gold-sputtered polyimide sheet and dried for about 12 hours under ambient conditions. The dried film was exposed to a 7 W CO$_2$ laser (Full Spectrum Laser H-series) to synthesize the LSG/Fe$_3$O$_4$ film. After being exposed to the laser, the LSG/Fe$_3$O$_4$ film was washed with deionized water and directly used as a supercapacitor electrode. To make the micro-structured electrode, the active material (LSG/Fe$_3$O$_4$) and the current collector were cut out of a six interdigitated electrode pattern using a 24-W CO$_2$ laser (Full Spectrum Laser H-series).

Example 2A: Synthesis of LSG/Fe$_3$O$_4$ Electrodes

An LSG/Fe$_3$O$_4$ electrode was fabricated by the *in situ* reduction of GO and oxidation of FeCl$_3$. A GO slurry and FeCl$_3$ particles were well dispersed in water. Due to the electrostatic effect, Fe$^{3+}$ absorbed on the negatively charged part of the hydrophilic oxygen functional groups of GO. After about 30 minutes of sonication, GO-wrapped Fe$^{3+}$ cation particles were obtained. Following the CO$_2$ laser etching, the mixed sample underwent a simultaneous oxidation of Fe$^{3+}$ (FeCl$_3$) to Fe$_3$O$_4$ and reduction of GO to LSG, and LSG-wrapped Fe$_3$O$_4$ was successfully synthesized.

Example 2B: Fabrication of an LSG/Fe$_3$O$_4$ Supercapacitor and Micro-Supercapacitor

The electrodes were extended by connecting copper tape and gold-sputtered polyimide as the current collector. These extended electrodes were connected to a Biologic VMP3 workstation for electrochemical characterization. Polyimide tape was used to insulate the copper tape from exposure to the electrolyte. A symmetric LSG/Fe$_3$O$_4$ supercapacitor was constructed from two pieces of LSG/Fe$_3$O$_4$ electrodes, separated by an ion-porous membrane, such as polypropylene. These two electrodes and separator were then assembled using polyimide tape after the electrolyte was added. In addition, the symmetric micro-supercapacitor electrodes were extended with copper tape along the edges to improve the connection between the electrodes and the workstation. Polyimide tape was used to cover the copper tape and define the micro-supercapacitor area. An electrolyte was coated onto the active area of the micro-supercapacitor.

Example 3: Assembly of All-Solid-State Supercapacitors

A gel electrolyte was fabricated by mixing equal amounts of Na$_2$SO$_4$ (e.g., about 1 g) and polyvinyl alcohol (e.g., about 1 g) in deionized water (about 10 mL) and then stirring for about 1 hour at about 80° C. The resulting gel electrolyte was applied to the electrodes and left for about 60 minutes in order to ensure complete wetting of the electrode surfaces. The two electrolyte-filled electrodes were assembled and dried for about 12 hours at room temperature until fully solidified.

Example 4: Materials Characterization and Electrochemical Measurements

Scanning electron microscopy characterization of the LSG/Fe$_3$O$_4$ was performed using a Nova 600 SEM/FIB device. The mass of the active material was measured by a Mettler Toledo MX5 microbalance, which was found to be about 382.4 micrograms per square centimeter ($\mu$g cm$^{-2}$). The effective thickness of the LSG/Fe$_3$O$_4$ hybrid capacitor was about 72.6 $\mu$m, including the active material, substrate (about 23.8 $\mu$m), and separator (about 25 $\mu$m). The TEM images and selected electron area diffraction patterns were collected on a Tecnai G2 TF20 TEM (FEI Inc.) operated at about 200 kV. The high-resolution TEM and selected electron area diffraction data were analyzed using EMMENU4 and ImageJ software. Thermo-gravimetric analysis and DTA were carried out on a Perkin Elmer Diamond Pyris TGA at a heating rate of about 10° C min$^{-1}$ in air. X-ray diffraction spectra were recorded on a Panalytical X'Pert Pro X-ray powder diffractometer using Cu K$\alpha$ radiation with a wavelength of about 0.154 nm. The electrochemical performances of the LSG/Fe$_3$O$_4$ electrodes were characterized by CV, galvanostatic CC, and electrochemical impedance spectroscopy (EIS) measurements with various electrolytes. The LSG/Fe$_3$O$_4$ electrode tests were carried out using three-electrode cells, with a platinum plate (Aldrich) as the counter-electrode and Ag/AgCl as the reference electrode. The LSG/Fe$_3$O$_4$ symmetric capacitors and micro-supercapacitors (two-electrode cells) were characterized using CV, CC, and EIS experiments. The EIS measurements were performed at open circuit potential with a sinusoidal signal over a frequency range from 1 MHz to 10 mHz and an amplitude of 10 mV. All electrochemical data were collected using a Biologic VMP3 electrochemical workstation equipped with a 10-A current booster (VMP3b-10, USA Science Instrument).

**TERMS AND DEFINITIONS**

Unless otherwise defined, all technical terms used herein have the same meaning as commonly understood by one of ordinary skill in the art to which the device described herein belongs. As used in this specification and the appended claims, the singular forms "a," "an," and "the" include plural references unless the context clearly dictates otherwise. Any reference to "or" herein is intended to encompass "and/or" unless otherwise stated.

As used herein, and unless otherwise specified, the term "about" or "approximately" means an acceptable error for a particular value as determined by one of ordinary skill in the art, which depends in part on how the value is measured or determined. In certain embodiments, the term "about" or "approximately" means within 30%, 25%, 20%, 15%, 10%, 9%, 8%, 7%, 6%, 5%, 4%, 3%, 2%, 1%, 0.5%, 0.1%, or 0.05% of a given value or range. In certain embodiments, the term "about" or "approximately" when used in relation to a percentage means within 30%, 25%, 20%, 15%, 10%, 9%, 8%, 7%, 6%, 5%, 4%, 3%, 2%, 1%, 0.5%, 0.1%, or 0.05% of a given percentage or range of percentages.

**Claims**

1. An energy storage device comprising:

   a) two or more electrodes, wherein at least one electrode comprises a carbonaceous material and a faradaic material comprising magnetite nanoparticles, wherein at least one of the two or more electrodes comprises a magnetite content of from 20% to 80%; and
   b) a redox-active electrolyte.

2. The energy storage device of claim 1, wherein the carbonaceous material comprises either: an interconnected corrugated carbon-based network; or laser-scribed graphene.

3. The energy storage device of claim 1, wherein the redox-active electrolyte comprises fluorine, manganese, chlorine, chromium, oxygen, silver, iron, iodine, copper, tin, quinone, bromine, iodine, vanadium, potassium ferrocyanide, hydroquinone, vanadyl sulfate, p-phenylenediamine, p-phenylenediimine, potassium iodide, potassium bromide, copper chloride, hydroquinone, copper sulfate, heptylviologen dibromide, methyl viologen bromide, or any combination thereof.

4. The energy storage device of claim 1, wherein the redox-active electrolyte comprises ferric cations.

5. The energy storage device of claim 1, wherein the redox-active electrolyte comprises an aqueous solution comprising either sulfate ions, or sodium ions.

6. The energy storage device of claim 5, wherein the aqueous solution comprises either: $Fe(CN)_6^{3-}/Fe(CN)_6^{4-}$ or $Na_2SO_4$.

7. The energy storage device of claim 1, wherein the carbonaceous material comprises laser-scribed graphene and wherein the redox-active electrolyte comprises $Fe(CN)_6^{3-}/Fe(CN)_6^{4-}$ and $Na_2SO_4$.

8. The energy storage device of claim 1, wherein the at least one electrode possesses a magnetic moment.

9. The energy storage device of claim 1, wherein the energy storage device is a battery, a capacitor, a supercapacitor, and/or a micro-supercapacitor.

10. A method of fabricating the energy storage of claim 1, the method comprising fabricating one of the two or more electrodes that comprises a carbonaceous material and a faradaic material comprising magnetite nanoparticles, wherein at least one of the two or more electrodes comprises a magnetite content of from 20% to 80% , said fabricating one of the two or more electrodes comprising:

a) sonicating a solution comprising the carbonaceous material and the faradaic material;
b) disposing the solution comprising the carbonaceous material and the faradaic material onto a substrate;
c) drying the substrate to create a dried film comprising the carbonaceous material and the faradaic material; and
d) exposing a portion of the dried film to light to reduce the carbonaceous material and oxidize the faradaic material.

11. The method of claim 10, wherein the light has a wavelength of 0.01 micrometer ($\mu$m) to 100 $\mu$m.

12. The method of claim 10, wherein the light is a laser.

**Patentansprüche**

1. Eine Energiespeichervorrichtung, die Folgendes beinhaltet:

a) zwei oder mehr Elektroden, wobei mindestens eine Elektrode ein kohlenstoffhaltiges Material und ein faradaysches Material, das Magnetit-Nanopartikel beinhaltet, beinhaltet, wobei mindestens eine der zwei oder mehr Elektroden einen Magnetitgehalt von 20 % bis 80 % beinhaltet; und
b) einen redoxaktiven Elektrolyten.

2. Energiespeichervorrichtung gemäß Anspruch 1, wobei das kohlenstoffhaltige Material Folgendes beinhaltet: entweder ein vernetztes gewelltes Netz auf Kohlenstoffbasis; oder lasergraviertes Graphen.

3. Energiespeichervorrichtung gemäß Anspruch 1, wobei der redoxaktive Elektrolyt Fluor, Mangan, Chlor, Chrom, Sauerstoff, Silber, Eisen, Iod, Kupfer, Zinn, Chinon, Brom, Iod, Vanadium, Kaliumferrocyanid, Hydrochinon, Vanadylsulfat, p-Phenylendiamin, p-Phenylendiimin, Kaliumiodid, Kaliumbromid, Kupferchlorid, Hydrochinon, Kupfersulfat, Heptylviologendibromid, Methylviologenbromid oder eine beliebige Kombination davon beinhaltet.

4. Energiespeichervorrichtung gemäß Anspruch 1, wobei der redoxaktive Elektrolyt Eisen(III)-Ionen beinhaltet.

5. Energiespeichervorrichtung gemäß Anspruch 1, wobei der redoxaktive Elektrolyt eine wässrige Lösung beinhaltet, die entweder Sulfationen oder Natriumionen beinhaltet.

6. Energiespeichervorrichtung gemäß Anspruch 5, wobei die wässrige Lösung Folgendes beinhaltet: entweder $Fe(CN)_6^{3-}/Fe(CN)_6^{4-}$ oder $Na_2SO_4$.

7. Energiespeichervorrichtung gemäß Anspruch 1, wobei das kohlenstoffhaltige Material lasergraviertes Graphen beinhaltet und wobei der redoxaktive Elektrolyt $Fe(CN)_6^{3-}/Fe(CN)_6^{4-}$ und $Na_2SO_4$ beinhaltet.

8. Energiespeichervorrichtung gemäß Anspruch 1, wobei die mindestens eine Elektrode ein magnetisches Moment besitzt.

9. Energiespeichervorrichtung gemäß Anspruch 1, wobei die Energiespeichervorrichtung eine Batterie, ein Kondensator, ein Superkondensator und/oder ein Mikrosuperkondensator ist.

10. Ein Verfahren zum Herstellen des Energiespeichers gemäß Anspruch 1, wobei das Verfahren Folgendes beinhaltet: Herstellen einer der zwei oder mehr Elektroden, die ein kohlenstoffhaltiges Material und ein faradaysches Material, das Magnetit-Nanopartikel beinhaltet, beinhaltet, wobei mindestens eine der zwei oder mehr Elektroden einen Magnetitgehalt von 20 % bis 80 % beinhaltet,
wobei das Herstellen von einer der zwei oder mehr Elektroden Folgendes beinhaltet:

a) Sonifizieren einer Lösung, die das kohlenstoffhaltige Material und das faradaysche Material beinhaltet;
b) Aufbringen der Lösung, die das kohlenstoffhaltige Material und das faradaysche Material beinhaltet, auf ein Substrat;
c) Trocknen des Substrats, um einen getrockneten Film zu erzeugen, der das kohlenstoffhaltige Material und das faradaysche Material beinhaltet; und
d) Aussetzen eines Abschnitts des getrockneten Films gegenüber Licht, um das kohlenstoffhaltige Material zu reduzieren und das faradaysche Material zu oxidieren.

**11.** Verfahren gemäß Anspruch 10, wobei das Licht eine Wellenlänge von 0,01 Mikrometern ($\mu$m) bis 100 $\mu$m aufweist.

**12.** Verfahren gemäß Anspruch 10, wobei das Licht ein Laser ist.

## Revendications

**1.** Un dispositif de stockage d'énergie comprenant :

a) deux électrodes ou plus, dans lequel au moins une électrode comprend un matériau carboné et un matériau faradique comprenant des nanoparticules de magnétite, dans lequel au moins l'une des deux électrodes ou plus comprend une teneur en magnétite allant de 20 % à 80 % ; et
b) un électrolyte à activité redox.

**2.** Le dispositif de stockage d'énergie de la revendication 1, dans lequel le matériau carboné comprend soit : un réseau interconnecté à base de carbone ondulé ; soit du graphène gravé au laser.

**3.** Le dispositif de stockage d'énergie de la revendication 1, dans lequel l'électrolyte à activité redox comprend du fluor, du manganèse, du chlore, du chrome, de l'oxygène, de l'argent, du fer, de l'iode, du cuivre, de l'étain, de la quinone, du brome, de l'iode, du vanadium, du ferrocyanure de potassium, de l'hydroquinone, du sulfate de vanadyle, de la p-phénylènediamine, de la p-phénylènediimine, de l'iodure de potassium, du bromure de potassium, du chlorure de cuivre, de l'hydroquinone, du sulfate de cuivre, du dibromure d'heptylviologène, du bromure de méthyl viologène, ou n'importe quelle combinaison de ceux-ci.

**4.** Le dispositif de stockage d'énergie de la revendication 1, dans lequel l'électrolyte à activité redox comprend des cations ferriques.

**5.** Le dispositif de stockage d'énergie de la revendication 1, dans lequel l'électrolyte à activité redox comprend une solution aqueuse comprenant des ions sulfate, ou des ions sodium.

**6.** Le dispositif de stockage d'énergie de la revendication 5, dans lequel la solution aqueuse comprend soit : $Fe(CN)_6{}^{3-}/Fe(CN)_6{}^{4-}$ soit $Na_2SO_4$.

**7.** Le dispositif de stockage d'énergie de la revendication 1, dans lequel le matériau carboné comprend du graphène gravé au laser et dans lequel l'électrolyte à activité redox comprend $Fe(CN)_6{}^{3-}/Fe(CN)_6{}^{4-}$ et $Na_2SO_4$.

**8.** Le dispositif de stockage d'énergie de la revendication 1, dans lequel l'au moins une électrode possède un moment magnétique.

**9.** Le dispositif de stockage d'énergie de la revendication 1, le dispositif de stockage d'énergie étant une batterie, un condensateur, un supercondensateur, et/ou un micro-supercondensateur.

**10.** Un procédé de fabrication du dispositif de stockage d'énergie de la revendication 1, le procédé comprenant la fabrication de l'une des deux électrodes ou plus qui comprend un matériau carboné et un matériau faradique comprenant des nanoparticules de magnétite, dans lequel au moins l'une des deux électrodes ou plus comprend une teneur en magnétite allant de 20 % à 80 %,
ladite fabrication de l'une des deux électrodes ou plus comprenant :

a) la sonication d'une solution comprenant le matériau carboné et le matériau faradique ;
b) la mise en place de la solution comprenant le matériau carboné et le matériau faradique sur un substrat ;
c) le séchage du substrat afin de créer un film séché comprenant le matériau carboné et le matériau faradique ; et
d) l'exposition d'une portion du film séché à de la lumière afin de réduire le matériau carboné et d'oxyder le matériau faradique.

11. Le procédé de la revendication 10, dans lequel la lumière a une longueur d'onde de 0,01 micromètre ($\mu$m) à 100 $\mu$m.

12. Le procédé de la revendication 10, dans lequel la lumière est un laser.

*FIG. 1*

*FIG. 2A*

*FIG. 2B*

*FIG. 2C*

FIG. 3A

FIG. 3B

FIG. 3C

FIG. 3D

FIG. 3E

FIG. 3F

*FIG. 4A*

*FIG. 4B*

FIG. 5

FIG. 6A

FIG. 6B

*FIG. 7A*

*FIG. 7B*

*FIG. 7C*

*FIG. 7D*

*FIG. 8A*

*FIG. 8B*

FIG. 8C

FIG. 8D

*FIG. 8E*

*FIG. 8F*

FIG. 8G

FIG. 8H

FIG. 8I

FIG. 9A

FIG. 9B

*FIG. 10A*

*FIG. 10B*

FIG. 11A

FIG. 11B

FIG. 12A

A: 4 mA/cm²
B: 8 mA/cm²
C: 12 mA/cm²
D: 16 mA/cm²
E: 20 mA/cm²

FIG. 12B

FIG. 12C

FIG. 12D

FIG. 12E

FIG. 12F

FIG. 13A

FIG. 13B

FIG. 13C

$$K_4Fe(CN)_6 \longrightarrow K_3Fe(CN)_6 + e^-$$

$$Fe^{2+} \longrightarrow Fe^{3+} + e^-$$

$$Fe^{3+} + e^- \longrightarrow Fe^{2+}$$

$$K_3Fe(CN)_6 + e^- \longrightarrow K_4Fe(CN)_6$$

A 0 M
B 0.005 M

Current density (mA cm$^{-2}$)

Potential (V vs. Ag/AgCl)

*FIG. 14*

FIG. 15

*FIG. 16A*

*FIG. 16B*

| Concentration of $Fe(CN)_6^{3-}/Fe(CN)_6^{4-}$ (M) | Areal Capacitance $(mF\ cm^{-2})$ | Coulombic Efficiency (%) |
|---|---|---|
| 0 | 89.4 | 92.8 |
| 0.025 | 168.6 | 90.8 |
| 0.050 | 169.0 | 81.7 |
| 0.100 | 162.9 | 30.1 |

*FIG. 16C*

FIG. 17A

FIG. 17B

*FIG. 17C*

*FIG. 17D*

*FIG. 18A*

*FIG. 18B*

*FIG. 19A*

*FIG. 19B*

*FIG. 19C*

FIG. 20A

FIG. 20C

FIG. 20B

FIG. 21A

FIG. 21B

FIG. 21C

FIG. 22A

FIG. 22B

FIG. 22C

A: Without RE-1V
B: Without RE-1.8V
C: 0.025M RE-1.8V

FIG. 22D

FIG. 22E

FIG. 23A

FIG. 23B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016133571 A
- US 20160148759 A